# EUROPEAN PATENT SPECIFICATION

(11) **EP 0 723 403 B1**
(45) Date of publication and mention of the grant of the patent: **23.08.2000**
(21) Application number: 94931364.7
(22) Date of filing: 14.10.1994
(51) Int. Cl.: A23L 1/0522

(54) **HIGH-AMYLOSE-STARCH-BASED TEXTURIZING AGENT**
TEXTURSMITTEL AUF BASIS VON AMYLOSE-STÄRKE
AGENT DE TEXTURE A BASE D'AMIDON A HAUTE TENEUR EN AMYLOSE

(30) Priority: 15.10.1993 US 138541
(43) Date of publication of application: 31.07.1996
(73) Proprietor: OPTA FOOD INGREDIENTS, INC., Bedford, MA 01730 (US)
(72) Inventor: MALLEE, Francis M., Acton, MA 01720 (US); FINOCCHIARO, Eugene Terry, Milton, MA 02186 (US); STONE, Joel A., Acton, MA 01720 (US)
(74) Representative: Holdcroft, James Gerald, Dr.
(86) International application number: PCT/US94/11654
(87) International publication number: WO 95/10196

(56) References cited:
- EP-A- 0 120 498
- EP-A- 0 366 898
- EP-A- 0 480 433
- EP-A- 0 495 407
- EP-A- 0 529 892
- EP-A- 0 554 818
- WO-A-93/03629
- US-A- 3 086 890
- US-A- 3 238 064

## Description

### Background of the Invention

The health advantages of a diet low in fat are well documented. Attempts to formulate low-fat versions of food products that typically contain a high percentage of fat are made difficult due to the many functional roles that fats play in foods. Removal of fat from a food often leads to negative effects on structure and organoleptic properties such as smoothness, flavor profile, opacity, lubricity, etc. The consumer demand for low-fat foods that retain the quality of the corresponding full-fat formulation has led to the development of a large number of potential texturizing agents and fat replacers based on proteins, polyesters, and a variety of other approaches.

Several examples of fat replacers derived from starch include: a partially debranched starch used for providing fat-like texture, forming opaque clouds and producing thermoreversible gels (EP Application 0 372 184 A1 and U.S. Patent No. 4,971,723 issued to Chiu); cold-water soluble and pregelatinized converted starches (by acid, enzyme or oxidation treatment) for use as fat or oil replacement in ice cream and mayonnaise (U.S. Patent No. 4,510,166 issued to Lenchin et al.); enzyme-hydrolyzed thermoreversible starch gels as fat substitutes in mayonnaise, cream cheese, whipped cream and meat applications (U.S. Patent Nos. 3,962,465 and 3,986,890 issued to Richter et al.); aqueous dispersion of granular starch hydrolysate (EP Application 0 443 844 A1 issued to Chiu et al.); macrocolloid carbohydrate particles for use in ice cream, yogurt, salad dressings, mayonnaise, coffee whitener and sour cream (PCT Application WO 89/12403 to Singer et al.); two-phase protein and carbohydrate fat substitute for use in salad dressings and cookie fillings (EP Application 0 441 494 A1 to Reimer); fat substitute comprising hydrated alginate and a complex carbohydrate (PCT Application WO 92/02147 to Shemer and Shemer); mixture of heat treated microcrystalline cellulose and xanthan gum used as a fat mimetic in frozen desserts and viscous and pourable salad dressings (PCT Application WO 91/02463 to Baer et al.); and insoluble modified starch used as a bulking agent, filler or texturizing agent in low-fat formulations (U.S. Patent 5,051,271 issued to Iyengar et al.).

A number of methods have been developed to modify starches for use in food formulations and include: subjecting defatted amylose containing starch to high temperature and shear to disrupt the starch granules thereby producing a gel (U.S. Patent No. 3,666,557 issued to Jensen and Long); cooking high amylose starch at 140-170°C to produce a solubilized cold water dispersible starch (U.S. Patent No. 3,515,591 issued to Feldman et al.); cooking high amylose starch under shear at a temperature higher than the gelatinization temperature to produce a yellow gel (U.S. Patent No. 3,836,677 issued to Freck et al.); and subjecting high amylose starches to a jet cooking/spray drying process to produce a pregelatinized starch (E.P. Application 0 366 898 A1 and U.S. Patent No. 5,131,953 issued to Kasica and Eden).

EP 480433-A-National Starch & Chemical Investment Holding Corporation describes foods comprising soluble high amylose starch that is spray-dried, non-granular, substantially non-crystalline and substantially non-retrograded and for the manufacture of this product EP 480 433 refers to EP 366,898 *supra* but in the process of EP 366,898 conditions are employed which avoid starch degradation during pre-gelatinisation.

US 3,238,064 - Macarus and Royal describes a method for purifying amylose by removal of fat. According to the process, starch and water are heated above about 250°F (121°C) but under conditions to avoid degradation of the starch, and then cooled, to fractionate the starch followed by contacting with a fat-sorbing filter aid.

WO 93/03629-A - A E Staley Manufacturing Company describes a process for preparing reduced fat foods using debranched amylopectin starch but again this process includes a pre-gelatinising step under pH conditions which minimize hydrolysis.

### Summary of the Invention

The invention relates to methods for producing starch-based texturizing agents, to novel texturizing agents, and to food formulations containing the texturizing agents. The texturizing agents of this invention are derived from high amylose starch which has been processed under specific conditions of temperature, pressure and shear, and has a dextrose equivalent (DE) value for the starch component of less than about 5, with about 1.5 being preferred as determined by the Luff-Schoorl method, Procedure D52, Corn Industry's Research Foundation, 6th Edition. The novel texturizing agents have unique properties in that they can stabilize fat containing food formulations and can be used to fully or partially replace the fat content of foods that traditionally contain fat.

The invention provides a method for preparing a starch based texturizing agent, comprising the steps of:
a) heating a slurry of high amylose starch in an acidic aqueous medium having a pH range of from 3 to 4.7 (e.g. from 4.3 to 4.7) under agitating conditions for a temperature, pressure and time sufficient to substantially disrupt starch granules, to produce a solubilized starch solution;
b) filtering the resultant solution to remove impurities; and
c) reducing the temperature of the resultant solution to a temperature and for a period of time sufficient for the starch to retrograde or partially retrograde, thereby yielding a starch-based texturizing agent having a dextrose equivalent of less than 5.

The invention also provides a method of producing a high amylose starch-based texturizing agent, comprising the following steps:
a) heating a slurry of high amylose starch in an acidic aqueous medium having a pH range from 3 to 4.7 (e.g. from 4.3 to 4.7) under agitating conditions for a temperature, pressure and time sufficient to substantially disrupt starch granules to produce a solubilized starch solution;
b) filtering the resultant solution to remove impurities; and
c) drying the solubilized starch solution by a suitable means to preserve the amorphous structure and produce a starch based texturizing agent that is non-retrograded and non-crystalline and has a dextrose equivalent of less than 5.

In one embodiment of the invention for example the starch-based texturizing agent is made by reducing dissolved oxygen in a slurry of high amylose starch in an aqueous medium under inert atmosphere to reduce formation of off-flavor and off-color generated in subsequent steps; heating the slurry at a temperature sufficient to disrupt starch granules in the slurry and to substantially solubilize the starch therein without significant degradation; filtering the solubilized starch, preferably by treatment with diatomaceous earth and activated charcoal to further reduce off-flavor and off-color; and reducing the temperature of the solution to a temperature and for a period of time sufficient for the starch to retrograde to attain essentially maximum viscosity and/or gel strength. The retrograded starch paste can be dried to give a crystalline, retrograded texturizing agent. Alternatively, the filtered starch solution can be dried at a temperature sufficient to maintain the solubility of the starch to produce a non-crystalline non-retrograded texturizing agent. A third alternative is to cool the filtered starch solution to a sufficient temperature for a sufficient period of time to partially precipitate the starch before drying, thereby giving a partially retrograded texturizing agent. The deflavored, decolored texturizing agents can be used directly in food formulations. Retrograded, partially retrograded and non-retrograded texturizing agents can be dried and later rehydrated. The structural and functional properties of the texturizing agent can be tailored to the specific end use by varying the process parameters such as the concentration of the starting materials, the conditions of time, temperature, pressure, pH and shear at the various stages of the process.

Depending upon the final processing of the pregelatinized starch, the resultant texturizing agent will be retrograded (in the case of cooling the starch prior to drying), non-retrograded (in the case where the solution is dried at a temperature sufficient to maintain the solubility of the starch) or partially retrograded (in the case where the starch is partially precipitated prior to drying). Whether a starch is retrograded can be ascertained by DSC (Differential Scanning Calorimetry) (see, for example, Slade and Levine in Recent Developments in Industrial Polysaccharides (eds. S.S. Stivala, V. Crescenzi and F.C.M. Deq), Gordon and Breach Science: New York, 1987, 387-430). The crystallinity can be determined by its X-ray defraction pattern. The retrograded texturizing agent is insoluble in water, exhibits both microparticulate- and gel-like structural and functional properties, is white in color and exhibits no off-flavors typical of starch products which have been exposed to high temperature processing or chemical modification. The retrograded texturizing agent also has a high degree of stability, i.e., minimal syneresis was observed during refrigerated storage for two months in the absence of microbial contamination. The stability of the texturizing agent regarding syneresis is novel in that most food starches are chemically-modified in order to prevent exclusion of water from the starch polymer upon retrogradation over time, a phenomenon which reduces the shelf-life of starch-containing products at a temperature sufficient to maintain the solubility of the starch.

The texturizing agent produced from drying the filtered solution at a temperature sufficient to maintain the solubility of the starch is non-retrograded, non-crystalline and amorphous. It is more readily hydrated in water compared with retrograded starches, but still retains the favorable properties of retrograded texturizing agents.

The texturizing agent produced by allowing the starch to partially precipitate before drying, i.e. a partially retrograded starch is partially crystalline and non-degraded. It still retains the favorable properties of retrograded texturizing agents.

The texturizing agents of the present invention provide a safe and cost effective product for use in foods and, alternatively, in drug and cosmetic applications. The functionality of the texturizing agent as a fat replacer and stabilizer is achieved without chemical modification of the starch polymer, does not necessitate the use of numerous adjunct ingredients, and is stable for use in a variety of food processing schemes such as high temperature cooking, baking, freezing, whipping, extrusion, pasteurization, HTST (high temperature, short time) processing, UHT (ultra-high temperature cooking) retorting, etc. In full fat products, the texturizing agents provide improved mouthfeel, body and stability. Food formulations containing the texturizing agents of the present invention exhibit excellent freeze/thaw and frozen storage stability, shelf stability and resistance to shear and thermal abuse.

Among the major issues facing food producers that employ currently available texturizers/fat replacers are the negative effects on taste due to the delivery of off-flavors, the masking of the foods inherent flavor and flavor delivery in the mouth by the texturizers/fat replacer. Key differences between the texturizing agents of the present invention and others are their lack of off-flavor, minimal masking of flavors, and minimal effects on flavor profile.

The versatile texturizing agents of this invention function to fully or partially replace fat in a variety of food products which typically contain fat in their formulation. The texturizing agents function to provide structure, opacity, viscosity, stability and acceptable organoleptic attributes with performance approximating the qualities of the corresponding full fat versions. The texturizing agents of the present invention have been shown to function well in both laboratory and commercial plant processing schemes and equipment.

### Brief Description of the Drawings

Figure 1 is a schematic representation of one embodiment for making the retrograded, crystalline texturizing agent of this invention.
Figure 2 is a schematic representation of one embodiment for making the non-retrograded, non-crystalline texturizing agent of this invention.

There now follows a detailed description but the scope of the invention is defined by the appended claims.

### Detailed Description of the Invention

The invention relates to methods for producing starch-based texturizing agents, to the novel texturizing agents themselves, and to stabilized, full-fat food formulations or food formulations in which the fat content has been fully or substantially replaced by the starch-based texturizing agents. For purposes of the present invention, the term "texturizing agents" will be used to describe products derived from high amylose (>30% amylose as determined by iodine binding) starch which has been processed under specific conditions of temperature, pressure and shear as described herein.

According to the method of this invention, texturizing agents are prepared from a high amylose starch which contains greater than about 30% amylose, and preferably about 70% amylose as determined by the iodine binding method. The high amylose starch can be obtained from a variety of plant sources, including but not limited to peas, oats, corn and barley. In addition, the high amylose starch can be chemically modified, for example by succinylation or crosslinking using known techniques. The starting material may be a product of the milling of whole grains in which the non-starch components of the grain have been removed. The milled starch product may be obtained in a wet or dry form. A number of commercial sources of high amylose starch include AMYLOMAIZE® VII (approx. 70% amylose; American Maize, Hammond, IN) and HYLON® VII (National Starch, Bridgewater, NJ). The amylose-containing starch starting material can either have a low fat content (less than about 1% fat) or it may contain fat. Regardless of fat content, the cooking step should be performed in an inert atmosphere to prevent oxidation of the fat and the solubilized starch filtered to remove a substantial fraction of the fat and protein. Filtering by treatment with diatomaceous earth and activated charcoal, as described below, results in removal of the fat and protein with greater efficiency, thereby yielding texturizing agents with improved sensory properties.

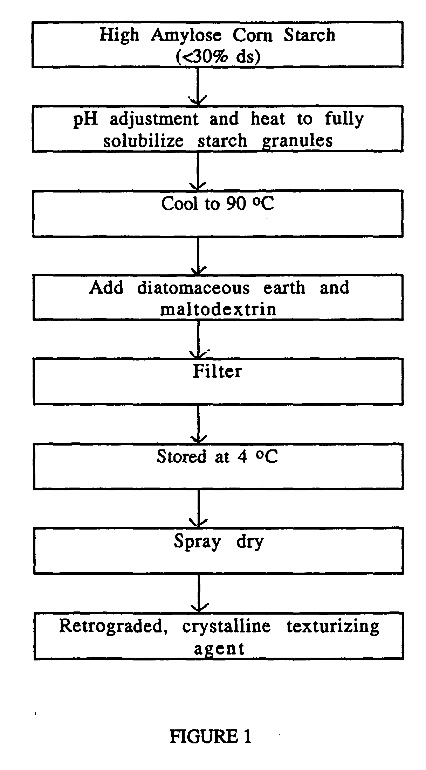

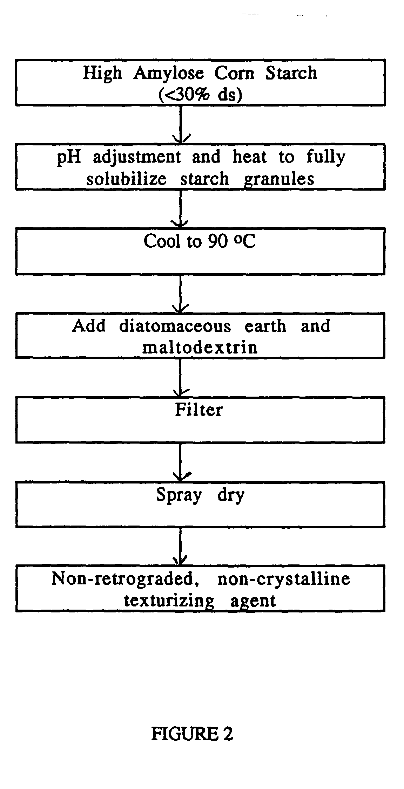

The method for producing the novel texturizing agents generally involves: deaerating a slurry of a high amylose starch starting material, for example, by deaerating the sample under evacuation and inert gas sparging; cooking the slurry under conditions of time, temperature, pressure, pH, ionic strength and shear sufficient to solubilize the starch by fully disrupting the starch granules while minimizing generation of objectionable side products which contribute off-flavor and off-color or substantially degrading the starch polymer; filtering the solubilized starch to remove a substantial portion of non-starch components such as lipid and protein, preferably by treatment with diatomaceous earth and activated charcoal; and cooling of the fully solubilized starch under controlled conditions of time, temperature and shear to yield a thixotropic gel. The retrograded texturizing agent can be dried to reduce the moisture content of the gel to provide a dry, free-flowing powder. Alternatively, the filtered starch solution can be dried at a temperature sufficient to maintain the solubility of the starch to yield a powdered non-crystalline, non-retrograded, amorphous texturizing agent that is more readily hydrated in water than retrograded starches. A third alternative is to cool the filtered starch solution to a temperature and for a period of time sufficient to allow partial precipitation of the starch, thereby resulting in a partially retrograded texturizing agent. In any of these three cases, the texturizing agents can be used directly in food formulations. The dry powder may be used directly or can be rehydrated prior to use. Each of these steps are discussed in detail below, and additionally shown schematically in Figures 1 and 2.

Specifically, the method involves preparing a starch slurry in an aqueous medium with a total high amylose starch content of from about 1 to about 30% (w/w) solids, preferably from about S to about 15% (w/w). For purposes of the present invention, "aqueous medium" is defined as water or a solution which is substantially water such as buffer, acid, base, salt, antioxidant, reducing agent, and/or chelating agent solutions or a blend of water with a miscible organic solvent, in an amount sufficient to inhibit oxidation of lipids present in the starch starting materials. It is preferred that the aqueous medium, such as water, be pretreated to remove any dissolved minerals. The starch may be hydrated at ambient temperature or after the aqueous medium has been heated.

The resulting slurry is aspirated or pumped into an evacuated reactor vessel equipped with appropriate stirring device for agitation during the cooking of the starch slurry. The slurry is then deaerated and sparged to remove gases (e.g., oxygen) and other volatile components. Removal of oxygen from the slurry is important to produce a product with minimal off-color and off-flavor, as ascertained by visual and sensory perception. This is achieved by subjecting the slurry to a vacuum, sparging with an inert gas such as argon or nitrogen using either a vented vessel or closed vessel, or any combination of techniques effective for removal of dissolved gases especially oxygen from the slurry. It is preferred that the dissolved oxygen content be less than 1 ppm to ensure that off-flavors resulting from oxidation are not perceived upon tasting. The deaerating step is carried out for a period of time necessary to insure removal of the bulk of the dissolved gases typically up to one hour, preferably, ten minutes. Other approaches to reduce off-flavors and off-colors may include, either alone or in combination, near complete removal of non-starch components from the starting material, the addition of antioxidants, reducing agents and or chelating agents to the slurry, or washing of the final product with aqueous or organic solvents, among other generally known methods.

After the oxygen content of the slurry has been reduced, the starch slurry is subjected to controlled conditions of time, temperature, pressure, pH, ionic strength and shear, to fully disrupt the starch granules and solubilize the starch without substantial degradation of the starch polymer via caramelization, hydrolysis, etc. For the purposes of the present invention, the term "solubilize" refers to the absence of any detectable particulate matter, especially partially disrupted starch granules, when viewed under 250-fold magnification using a standard light microscope. The rate of heating, time duration at the final cook temperature (i.e., the temperature above the gelatinization temperature of starch), and shear rate in the reactor vessel affect the properties of the final product.

The slurry is typically heated from room temperature (approximately 22°C) to from about 125°C to about 150°C, with about 138°C being preferred, under stirring over a time period which ranges from 1 to 120 minutes, preferably 60 minutes until starch granules are solubilized. The rate of stirring typically ranges from 250 to 450 revolutions per minute (rpm), and preferably 350 rpm. Variations in initial temperature and rate of heating affect the properties of the final gel product even though the total time at 138°C is essentially unchanged.

The concentration of the high amylose starch solids in the reactor can be varied to yield products with different functional properties. For instance, texturizing agents produced at 5% starch on a dry solids basis (dsb) in the reactor yield final products of higher viscosity but lower opacity when compared to a texturizing agent produced at 10% dsb under identical processing conditions. The differences in opacity and viscosity are apparent in both the gel per as and in final formulated food products, such as cheesecake and mayonnaise. In essence, the properties of the final texturizing agent are sensitive to relatively minor changes in any of the process parameters. This sensitivity to conditions in the reactor enables one to produce a variety of texturizing agents from a single starting material.

The final temperature of 138°C for cooking of the starch is preferred to produce texturizing agents that possess smooth mouthfeel, high opacity, and acceptable organoleptic properties. The complete disruption and solubilization of the starch is monitored by periodic sampling of small aliquots from the reactor over time and examination of the slurry under magnification (e.g., 250 fold) for presence or absence of starch granules. The slurry is heated at about 125° to about 150°C (about 138°C being preferred) for a time period which ranges typically from about 1 to about 120 minutes, preferably about 60 minutes. The heating step is considered complete when essentially all the starch granules have dissolved. The importance of the final temperature used in the present invention is illustrated by the following comparison. High amylose starch was heated to a maximum temperature in the reactor of 121°C for 8 hours in the absence of shear. Even though the cooking process is carried out for a much longer time period than that of the present invention, this lower temperature does not allow for complete solubilization and disruption of the starch granules resulting in a product that contains relatively large particulates that exhibit grittiness and poor mouthfeel when tasted directly. In contrast, the higher temperature used in the present process insures full disruption of the starch granules and solubilization of the high amylose starch which yield a much smoother product.

An alternative method of heating is to directly inject steam into the slurry, such as can be accomplished in a rapid heat-up device such as a jet cooker. Using a jet cooker or other rapid heat-up device, higher temperatures above the preferred range can be tolerated without affecting product properties if the contact time is sufficiently short. Generally, the temperature is raised up to about 160°C and maintained at the elevated temperature for up to about ten minutes. Higher temperatures can be used for shorter time periods.

Regulation of pH is also important to the texturizing properties of the product. According to the methods of this invention, the typical pH of the slurry before and after cooking is in the range of from about 3 to about 7, preferably about 4.3 to about 4.7. The acidity of the slurry is controlled using appropriate food grade acidulants and alkali. Reducing the pH of the slurry to about 3 prior to processing results in a texturizing agent of much lower viscosity but much higher opacity compared to a texturizing agent prepared at pH 4.5 with all other conditions remaining constant. The combination of lower viscosity and higher opacity permits this version of the texturizing agent to be used in applications, such as non-dairy coffee creamers and pourable salad dressings.

Upon complete disruption of the starch granules and solubilization of the starch, the starch solution is cooled to a temperature below boiling and above about 85°C. Temperatures lower than about 85°C will result in inefficient filtration as the starch retrogrades. Cooling can be accomplished by running cooling water through the reactor jacket. The cooled starch solution is then removed from the reactor vessel by expulsion under pressure, pumping, or other suitable method.

The starch solution (at approximately 90°C) is filtered to remove undissolved impurities, such as protein, fats and other compounds. Any filtration device having metal sieves, filter papers/cloths, filter pads or other filter media can be used. For example plate and frame filter presses, cartridge, bag and pressure leaf filters can be used. It is desirable to preheat the filters and filtering device to the temperature of the slurry to be filtered prior to filtration. This will prevent premature retrogradation of the starch on the filter media and consequent blinding of the filter.

The filtration step is preferably performed by filtering the solution through a secondary carbon-containing filter such as a filter fitted with activated charcoal impregnated pads or a filter fitted with a cartridge containing activated charcoal. In a preferred embodiment, a filter aid such as diatomaceous earth is typically added to the starch solution and stirred for about ten to about 120 minutes, with 60 minutes being preferred. The amount of diatomaceous earth used is generally from about 5% to about 20% by weight of the starch being purified, and is preferably about 10% by weight. The starch solution is then passed through a primary filter to remove the diatomaceous earth and then through the secondary filter containing the activated charcoal impregnated pads. Suitable carbon impregnated pads are available, for example, from Alsop Engineering Co., Kingston, NY (S-51, grade 872).

Alternatively, the filtration step is performed by treating the starch solution with activated charcoal after the solution is cooled to about 90°C. Activated charcoal is added to the reactor vessel for approximately from about 10 to about 120 minutes, with 60 minutes being preferred. Typically, the solution is simultaneously treated with a filtering aid such as diatomaceous earth, e.g. CELITE® (Celite Corp.). The amount of diatomaceous earth generally used is as described above. The starch solution containing suspended activated charcoal and diatomaceous earth is then filtered, as described above, to remove the charcoal and diatomaceous earth.

Starch based texturizing agents which have been treated with activated charcoal and diatomaceous earth have reduced protein and fat contents compared with starch based texturizing agents which have not undergone this treatment. By removing impurities from the starch solution which prevent crystallization, filtration facilitates the crystallization of the starch. In addition, treatment with diatomaceous earth and activated charcoal gives the resulting texturizing agent improved sensory properties such as flavor (see Example 1).

The filtered starch solution is collected in a receiving vessel. A retrograded, non-retrograded or partially retrograded starch can be produced from the filtered starch solution, depending on how the solution is processed. Drying the filtered starch solution before the starch precipitates produces a non-retrograded starch. Allowing the solution to cool so that the starch precipitates yields a retrograded starch. Adjusting the temperature and time of precipitation so that the starch only partially precipitates results in a partially retrograded starch.

A retrograded starch is produced by cooling the filtered or treated starch solution to a temperature sufficient to allow the starch to precipitate, typically from about 1°C to 70°C, preferably to about 4°C. Optionally, salts suitable for use in food such as sodium chloride can be added to increase the rate of crystallization. Cooling should be carried out with a minimum of shear for maximum gel strength in the resultant precipitated texturizing agent; however, application of shear during the cooling step can be used to produce texturizing agents with varied functional properties, i.e., lower viscosity. For example, the filtrate can be stored in a temperature controlled cooler overnight. Alternatively, a belt flaker can be used to cool the filtrate. After completion of the cooling process, the resultant precipitate can be stored in the temperature range of from about 4°C to about 50°C, preferably about 4°C to about 22°C.

Starch solutions can be combined with one or more enzymes that convert the dissolved starch into other products useful in food applications. For example, the conversion of starch solutions into a food grade, non-digestible insoluble bulking agent is described in U.S. Patent 5,051,271. Starch solutions of the present invention which have been treated with diatomaceous earth and activated charcoal, as described above, result in products with improved properties when converted enzymatically into a non-digestible insoluble bulking agent, compared with starch solutions that have not been so treated. For example, when reacted with pullanase, starch solutions treated with activated charcoal and diatomaceous earth yielded starches which contain 40% more dietary fiber compared with starch solutions in which the treatment was omitted (see Example 2).

Optionally, the treated, filtered starch solution can be subjected to shear before being allowed to retrograde in order to improve the sensory properties of the product. The filtered, treated starch solution is collected in a receiving vessel or can be purged directly to a homogenizer for shearing as described below. Temperature of the slurry is maintained at about 90°C in the vessel. The starch solution is subjected to shear using a suitable technique to yield a smooth product. Shear may be provided by piston, probe, jet, or valve homogenization (e.g., one and two stage), colloid milling, or similar technique. Conditions of shear will vary with the specific technique employed.

For the purpose of illustration, typical conditions for small-scale probe homogenization (e.g., using a POLYTRON® homogenizer, Brinkman Instruments, Westburg, NY) involve subjecting the starch of abut 90°C to a shear rate in the range of from about 5,000 to about 20,000 rpm, preferably about 10,000 rpm for a time duration of from about 5 to about 20 minutes, preferably about 8 minutes. For valve homogenization, processing in the pressure range of from about 1,000 to about 10,000 pounds per square inch (psi) (6.89 x 10⁶ - 6.89 x 10⁷ Pa), preferably from about 2,000 to about 5,000 psi (13.79 x 10⁶ - 34.47 x 10⁶ Pa) is sufficient to prepare a texturizing agent with properties that are suitable for use in food formulations. A preferred homogenization device is a single stage Gaulin homogenizer set at about 3000 psig pressure (20.78 x 10⁶ Pa). After being subjected to shear, the starch solution is allowed to retrograde, as described above, or is spray-dried, as described below.

Excipients such as sugars, gums, other starches etc. that aid in rehydration or improve functionality in specific food applications can be optionally added at any point in the cooking, filtration and homogenization steps. Preferred excipients are any hydrolyzed starch-based carbohydrate, with low DE maltodextrin being most preferred. Excipients that aid in the rehydration are not necessary if the resultant starch solution is used in wet form without prior drying and rehydration or if the dry powder is rehydrated under conditions of sufficient heat and shear to insure complete rehydration.

The retrograded texturizing agent can then be used directly in food formulations or dried by an appropriate method to a white, free-flowing powder. If the retrograded texturizing agent is dried, the preferred method is to use a spray dryer to achieve rapid drying. This preserves the functional characteristics and facilitates rehydration. For example centrifugal atomizers, pressure nozzles and two fluid nozzles can be used to atomize the starch gel. Alternative drying methods can be used and include drum drying and freeze drying.

The properties of the texturizing agent may be further modified at this point in the process by co-drying with added constituents such as sugars, colorants, flavors, gums, maltodextrin, other starches, proteins, lipids, etc. The powder can be used directly in food formulations or rehydrated prior to use by addition of water and subjecting to suitable conditions of time, shear, temperature, etc.

The retrograded product of the invention is crystalline, non-degraded, insoluble in cold water and can only be rehydrated at elevated temperatures (above 90°C). The retrograded product exhibits both microparticulate- and gel-like structural and functional properties, is white in color and exhibits essentially no off-flavors typical of starch products. The microstructure of the product as characterized by SEM can be described as a semi-continuous, macroporous gel network composed of filaments of a uniform diameter. The gel network is devoid of starch granules or granule fragments and its discontinuous portions appear as roughly spheroidal microparticles. The protein content is less than 0.3%, with 0.15% preferred. The total organic solvent (e.g., petroleum ether, diethyl ether, hexane, chloroform,) extractable material is less than 2% but is typically 1.2%. The hydrated product exhibits a high degree of stability and no syneresis during refrigerated storage in the absence of microbial contamination. The stability of the texturizing agent regarding syneresis is novel in that most starches must be chemically-modified in order to prevent exclusion of water from the starch polymer upon retrogradation over time.

In another aspect of the present invention, the starch solution after filtration is processed such that a non-retrograded starch is produced. A non-retrograded starch is trapped in a glassy state which is characterized by the absence of crystalline regions within the starch polymer, i.e. the glass is amorphous and non-crystalline. Consequently, starch in the glassy state can be more readily hydrated in water. In addition, the glassy state preserves the desirable functional characteristics of the starch, for example reduction in off-flavors, stability, no syneresis during refrigerated storage, and suitability for use as fat replacements in food.

The glassy state is created by removing water from the solution sufficiently fast at a sufficiently elevated temperature to immobilize the starch molecules before they have a chance to order in the retrograded state. This is accomplished, for example, by drum drying, belt drying, flash drying or spray drying. Spray drying is preferred and is carried out by maintaining the filtered starch solution at an elevated temperature sufficient to prevent crystallization of the starch, for example at about 85°C to about 95°C The filtered starch solution is then fed to a commercially available spray dryer (e.g. Crepaco Compact Spray Dryer, APV Crepaco Inc., Tonawanda, NY) at a suitable inlet temperature. The treated starch solution is then atomized through the nozzle of the spray dryer. A variety of commercially available nozzles can be used, for example a two fluid nozzle from Spraying Systems Co., Wheaton, IL (Set Up 22B). The atomized mist of the treated starch solution is dried by subjecting the atomized mist to elevated temperatures (referred to as the outlet temperature) in the spray dryer chamber. The resulting product is a free flowing white powder with a lower bulk density and is more readily hydrated in water compared with the retrograded starch counterpart. The inlet and outlet temperatures used depend on the type of spray dryer, the scale of the process, the feed rate and how much moisture is desired in the final product. The skilled artisan will be able to determine the appropriate outlet temperature, based on the conditions used and the desired properties of the final product. In one example using a two fluid nozzle from Spraying Systems Co., Wheaton, IL (Set Up 22B), the outlet air temperature is about 93°C and the inlet temperature is about 216°C (see Example 3).

In another aspect of the present invention, a partially retrograded product is obtained by cooling the filtered starch solution to a temperature at which the starch partially retrogrades, e.g., from about 50°C to about 60°C. After the partial retrogradation is complete, the slurry is dried, as described above, for example by spray drying, to yield a partially retrograded texturizing agent. The degree of retrogradation can be controlled by varying the time and temperature at which the filtered solution is allowed to retrograde.

Excipients and other constituents such as sugars, gums, maltodextrin, other starches, proteins, lipids, etc. can be optionally added to the non-retrograded or partially retrograded texturizing agent, as described above for the retrograded texturizing agent. The non-retrograded powder or the partially retrograded product can be used directly in food formulations or rehydrated prior to use by addition of water and subjecting to suitable conditions of time, shear, temperature, etc.

The product of the invention which is spray dried at a temperature sufficient to prevent precipitation of the starch is amorphous, non-crystalline and more readily soluble in water than the retrograded product. It retains the desirable characteristics of the retrograded product, discussed above, such as essentially no off-flavors typical of the starch products, stability, no syneresis during refrigeration, and suitability for use as a fat substitute in food. The non-retrograded powder, once rehydrated, will retrograde.

The texturizing agents of the present invention provide a safe and cost effective product for use in foods and, alternatively, in drug and cosmetic applications. The functionality of the texturizing agent as a fat replacer is achieved without chemical modification of the starch polymer, does not necessitate the use of numerous adjunct ingredients, and is stable for use in a variety of food processing schemes including high temperature cooking, baking, freezing, whipping, extrusion, pasteurization, high temperature short time (HTST) processing, UHT (ultra-high temperature processing), retorting, etc.

The versatile texturizing agents of this invention function in full-fat foods or can fully or partially replace fat in a variety of food products which typically contain a high percentage of fat in their formulation. Generally, the texturizing agent can be incorporated into food formulations at levels between about 0.5 and about 10%, preferably between about 1.0 and about 6% (w/w). Applications of the texturizing agents include viscous systems such as mayonnaise and spoonable and pourable salad dressings; confections such as cake frostings and fudge toppings; baked applications such as cheesecake; cold processed foods such as a no-bake cheesecake; processed cheese; cream- and cheese-based sauces such as Hollandaise and Alfredo sauces; savory sauces; cultured and non-cultured dairy products such as sour cream, cream cheese, yogurt, cottage cheese dressing, ice cream; whipped applications such as chocolate mousse, toppings and cream fillings; frozen desserts and retorted formulations such as canned soups, among others. The fat-like attributes and stability are achieved without chemical modification of the starch. As a result of these fat-like attributes, food formulations normally containing fat can now be made having reduced levels of fat approaching 100% reduction in certain formulations.

The texturizing agents work particularly well in cultured and processed dairy products to stabilize the food product. Non-fat and reduced fat containing dairy products with excellent organoleptic properties can be formulated. Dairy products, such as cultured sour cream and processed cream cheese spread, containing the texturizing agent, when stored refrigerated over a period of time, exhibit excellent stability.

The texturizing agents function to provide structure, opacity, viscosity, stability, and acceptable organoleptic attributes with performance approximating the qualities of the full fat versions when used in reduced fat foods. The texturizing agents lack off-flavors, do not mask the flavors of the foods' inherent flavors when added to a food formulation and have minimal effects on flavor profile. The food formulations containing the texturizing agents of the present invention exhibit excellent freeze/thaw and frozen storage stability, shelf stability and resistance to shear and thermal abuse. The texturizing agents of the present invention have been shown to function well with both laboratory and commercial plant processing schemes and equipment.

### Processed Cheese

One embodiment of this invention relates to substantially fat free, reduced fat and low fat cheese products that have textural and organoleptic mouthfeel properties of a full fat, conventional cheese product, and to methods for making the cheese products. The cheese product comprises traditional cheese ingredients and a starch based texturizing agent that is derived from pregelatinized, high amylose starch. Traditional ingredients comprise non-fat and/or fat containing dairy ingredient(s), optional emulsifying salt(s), and one or more flavoring agents. The non-fat, reduced fat and low fat cheese products have the sensory and visual attributes including the melt down properties of equivalent full fat products. The reduction in fat translates into reduction in overall calories of the finished cheese product.

The term "cheese product" shall embrace processed cheese, processed cheese food, processed cheese spreads and imitation cheese, all of which can optionally be pasteurized.

The terms "non-fat" and "fat free" are intended to mean herein a cheese product that contains less than 0.5 gram total fat per 30 gram serving. The term "reduced fat" is intended to mean herein a cheese product having greater then or equal to a 25% reduction in fat compared to the full fat equivalent. The term "low fat" is intended to mean a cheese product that contains 3 grams total fat per 50 gram serving. These levels of fat are consistent with the definitions of "fat free", "reduced fat" and "low fat" as set forth by the Nutrition Labeling and Education Act (NLEA), Federal Register, January 6, 1993.

For purposes of this embodiment, the term "starch based texturizing agent" will be used to describe products derived from pregelatinized, high amylose (greater than about 30% by weight amylose as determined by iodine binding) starch which has been processed under specific conditions of temperature, pressure and shear, and has a dextrose equivalent (DE) value for the starch component itself of less than about 5, with about 1.5 being preferred as determined by the Luff-Schoorl method, Procedure D52. Corn Industry's Research Foundation, 6th Edition. Methods for making the texturizing agents are described in detail above. As discussed above, excipients can be incorporated into the final texturizing agent. When an excipient is incorporated into the starch based texturizing agent, the DE value will vary depending upon the amount and type of excipient that is used. Incorporation of about 25% by weight maltodextrin as excipient results in a product with good properties for this application. Examples of commercially available maltodextrins include M040 (DE value of 4-8) and M100 (DE of 10), both of which are produced by Grain Processing Corporation.

According to the method of this invention, the starch based texturizing agent is blended into traditional cheese ingredients (e.g., non-fat, reduced fat and low fat dairy ingredients, optional emulsifiers, and flavoring agents) and requires no special processing modifications. However, it is desirable to completely hydrate the texturizing agent in order to uniformly distribute the texturizing agent in the cheese ingredients. The texturizing agent can be mixed into the liquid ingredients under high shear to form a slurry or paste. Alternatively, the texturizing agent can be blended with the dry cheese ingredients and then mixed with the remaining ingredients using a direct steam injection auger mixer/cooker commonly used in the processed cheese industry. The resultant cheese melt can be packaged in accordance with conventional packaging procedures into blocks, slices, spreads, cold packs or it can be shredded. See Cheese and Fermented Milk Foods by F.V. Kosikowski, pp 382-406, the entire teachings are incorporated herein by reference.

The amount of texturizing agent used will depend upon the desired end product. Preferably the texturizing agent can be added in amounts of from about 1.0% to about 4.0% by weight, with from about 1.5% to about 2.5% by weight being preferred.

The starch based texturizing agent can effectively be used to replace fat containing ingredients as well as partially or totally replace fillers which are traditionally incorporated into cheese formulations. The texturizing agent can be used in place of or in combination with skim milk cheese, dry cottage cheese, whey, whey protein concentrate, skim milk, NFDM, microcrystalline cellulose, carrageenan, carboxymethylcellulose, hydrolyzed oat and corn flours, xanthan gum, guar gum, casein, maltodextrin, cellulose and milk proteins.

A substantially fat free cheese product will comprise the starch based texturizing agent, non-fat dairy ingredient(s), optional emulsifying salt and one or more flavoring agents. Non-fat dairy ingredient(s) include, but are not limited to, skim milk cheese, non-fat dry milk, skim milk, skim butter milk and milk protein isolates (e.g., caseinates, whey protein isolates and/or concentrates). A reduced fat or low fat cheese product will comprise the same ingredients as the non-fat cheese product but with less filler. Low fat dairy ingredient(s) or fat containing dairy ingredient(s) can be incorporated into the formulation, such as whole milk, whole milk cheese, reduced fat milk and fat milk cheese.

Suitable flavoring agents such as buttermilk solids, natural and artificial butter and dairy flavor components, enzyme modified cheese, and mixtures thereof, may be incorporated into the cheese formulations of this invention. Flavoring ingredients containing fats should not be used in amounts which would increase the total fat content of the finished non-fat product above the desired levels of 1.6%. Fruits, vegetables, meats and spices, such as pimento, peppers, fat free natural or analog bacon bits and the like, may also be provided as adjunct components in a matrix of the cheese product. The amount of these components will depend upon the desired end product.

Non-fat, reduced fat and low fat cheese products containing the starch based texturizing agent can be made without the need for any emulsifying salts. However, conventional emulsifying salts utilized in fat-containing processed cheese products can be optionally used in the formulations of this invention. One or any mixture of emulsifying salts can be used and include monosodium phosphate, disodium phosphate, dipotassium phosphate, trisodium phosphate, sodium metaphosphate (sodium hexametaphosphate), sodium acid pyrophosphate, tetrasodium pyrophosphate, sodium aluminum phosphate, sodium citrate, potassium citrate, calcium citrate, sodium tartrate and sodium potassium tartrate. Preferred examples of suitable emulsifying salts include disodium phosphate in an amount of from about 0.5 to about 2.5 percent by weight; sodium citrate in an amount of from about 0.25 to about 1.5 weight percent; trisodium phosphate in an amount of from about 0.5 to about 2.0 weight percent.

It is not critical to monitor the pH during the manufacture of the cheese. However, an acceptable finished cheese product will have a pH in the range of from about 5.1 to about 5.9.

Cheese products produced according to this invention have good finished moistures but yield firm, cohesive cheese blocks. These finished moistures enable the cheese product to be shredded or sliced. Retention of water in the final cheese product further results in an overall increased weight of the product. Due to increased water content, compared to a similar product that does not contain the texturizing agent, the cheese product has a better body. The cheese product has good melt down properties that are well suited for cooking and food preparation in which melted cheese is employed. The cheese product further has the ability to heat up and cool down quickly, which may increase the rate at which non-fat, reduced fat and low fat cheese products can be manufactured. The reduction and potential elimination of some traditional ingredients and increased product weight may provide an overall savings in the manufacturing cost.

### Edible Spreads and Cream Cheese

In another embodiment, the invention relates to substantially fat free, reduced fat and low fat margarine-like spreads, dairy spreads and cream cheeses which are collectively referred to herein as "spreads". The spreads have the taste, mouthfeel and textural properties of full fat spreads. The spreads comprise starch and a starch based texturizing agent that is derived from pre-gelatinized, high amylose starch. The spreads can further comprise adjunct ingredients, such as milk solids, emulsifying salts, polydextrose, fat (as heavy cream or liquid oil), proteins and titanium dioxide, to modify physical and organoleptic properties.

The terms "non-fat" and "fat free" are intended to mean herein a spread contains less than 0.5 grams total fat per 15 gram serving for spreads and 0.5 grams total fat per 30 gram serving for cream cheese. The terms "reduced fat", "low fat" and "starch based texturizing agent" are as defined above in the section for cheese products.

In addition to the starch based texturizing agent, starch is added to a spread formulation in order to enhance the gel strength of the final product. The term "starch" is intended herein to mean any starch which is a hydrolyzed starch (e.g., maltodextrin), granular starch or non-granular starch. For example, the presence of maltodextrin, beyond that which is added as part of the starch based texturizing agent, serves as a thickening/gelling agent. The preferred amount of maltodextrin is about 20 percent by weight. Maltodextrin level can be adjusted upward or downward to give textures ranging from a stick margarine to a soft spreadable tub product to a pourable, squeezable product. The amount of maltodextrin will depend upon the desired end product and can be readily ascertained by one skilled in the art.

A non-fat margarine-like spread can be prepared using the starch based texturizing agent. This non-fat spread is unlike traditional margarine-like spreads because it can be made without an oil phase. The presence of the starch based texturizing agent functions to gel the spread ingredients without the need for traditional viscosifying or thickening agents such as gelatin, emulsifiers and hydrocolloids such as carrageenans, pectin, alginate, agar and gellan. The resultant margarine-like spread has a fat like rheology similar to full fat equivalents. The non-fat spreads can be made without dairy ingredient(s) or can contain non-fat dairy ingredients such as skim milk, skim butter milk, skim milk powder and milk protein isolates (e.g., caseinates, whey protein isolates and/or concentrates).

Preparation of a non-fat margarine does not require complex manufacturing techniques or equipment. It is preferred that the texturizing agent be added to heated water, under high shear, to facilitate adequate solubilization. The amount of texturizing agent is from about 1 percent to about 6 percent by weight, with about 3 percent being preferred. The margarine ingredients are then added to the hot aqueous solution and mixed, followed by homogenization. Color and flavoring agents can then be added. The mixture is cooled at a rate to avoid phase separation. The purpose of the cooling step is to allow the spread to gel and set up.

Reduced fat and low fat containing spreads can also be made in a manner similar to the above-described process. In this case however, dairy ingredient(s) are added to the formulation to yield an oil-in-water emulsion. The texturizing agent serves to stabilize the water and oil phases. Again, the resultant spreads do not require gelling agents, gelatin, emulsifiers, gums, hydrocolloid such as carrageenan to adequately viscosify the product into a form which resembles margarine or butter. There is no observed phase separation in spreads made according to the present invention. The spreads do however, exhibit slight syneresis over a 3 to 4 day period of time.

Other adjunct ingredients can be employed to modify certain organoleptic and/or physical attributes. For example, the addition of a 3% fat will enhance the overall flavor as well as provide a slight increase in lubricity with a softer body. Likewise, various gums (xanthan, locust bean gum, guar gum, gum arabic, carrageenan, etc.) have been incorporated to modify texture. Low levels of xanthan gum (0.015-0.4%) have been employed to soften texture and improve spreadability of the product. Although any acidulant can be used to lower pH, lactic acid is most compatible and has been used successfully in the formulation of a high acid product. Glycerol (1-4%) has been employed to enhance lubricity without adversely affecting texture and spreadability of the finished product. Milk solids can be employed to increase the body in the finished product.

As with most food formulations, commercial processing equipment can drastically effect ultimate textural attributes of the finished product. Pilot plant trials employing ultra high temperature (UHT) processing have indicated a superior product can be produced, presumably due to the complete solubilization of sub-micron amylose crystallites before "re-setting" as the finished product. Likewise, formulation trials with "paste" material (pre-gelled starch slurry without spray drying) results in similar results with less process (i.e., hydration) steps needed in the manufacturing of the finished spread.

A non-fat, reduced fat or low fat cream cheese can be prepared according to traditional food industry processing techniques using fat containing and non-fat dairy ingredients, such as non-fat milk solids, skim milk curd and concentrated skim milk, produced for example by evaporation, by ultrafiltration treatment to provide a skim milk retentate, or by reconstitution of dried skim milk. Whole milk and reduced fat milk products can also be used. The starch based texturizing agent is incorporated into the cream cheese formulation in an amount of from about 1 to about 6 percent by weight, with about 3 percent by weight being preferred. In a preferred embodiment the cream cheese product will comprise from about 1 to about 8 weight percent of nonfat milk solids provided from the concentrated skim milk, from about 5 to about 15 weight percent of from about maltodextrin, from about 0.01 to about 0.4 weight percent xanthan gum, from about 0.2 to about 1 weight percent salts and the remainder being skim milk. The amount of dairy ingredient(s) will vary depending upon the fat content of the desired product.

The mixture is subjected to high shear homogenization to provide a product resembling cream cheese in appearance and texture. Remaining ingredients are then added to the mixture such as acidulants, spices, flavors, gums, colors, salt, preservatives, vitamins and minerals. The resultant mixture can be pasteurized.

Suitable gums are hydrocolloids, such as xanthan, carrageenan, guar gum, carob bean gum, alginic acid and sodium and calcium salts thereof, gum arabic, gum tragacanth, carboxymethyl cellulose and pectin. The starch may be any food starch, such as corn starch, potato starch, rice starch or tapioca starch, each of which can be in native or pregelatinized form. Modified starches can also be used.

The invention is further illustrated by the following examples which are not to be construed as limiting in any way:

### EXAMPLE 1

### DEFLAVORING PRE-GELATINIZED STARCH USING CELITE AND CARBON FILTRATION

A stainless steel reactor was charged with 80 gallons (302.8 liters) of reverse osmosis water. Under moderate agitation, 84 lb (38.1 kg) of 70% amylose starch (AMYLOMAIZE VII®, American Maize, Hammond, IN) was added. The pH of the slurry was adjusted to 4.5 using phosphoric acid (80%, w/w). The reactor was sealed. Oxygen was purged from the reactor and starch slurry by eight repeated evacuations of the head space and sparging the liquid phase with nitrogen. Vacuum was pulled to a minimum of 25 inches (635 mm) of mercury (8.46 x 10⁴ Pa). Nitrogen was sparged into the vessel through a dip tube into the liquid phase. The nitrogen was applied until the vessel pressure reached 2 inches (50.8 mm) Hg (6.77 x 10³ Pa) vacuum. At the end of this sparging process, the oxygen content in the liquid phase was less then 1.0 ppm. Under agitation, the vessel contents were heated to 280°F (138°C) in approximately 90 minutes. After the batch temperature was held at 280°F (138°C) for 30 minutes a sample was removed from the reactor by opening an outlet port. The sample was examined for the presence of remaining starch granules or granule fragments with a microscope (Olympus Corporation, Lake Success, NY, Model BHS) under 250-fold magnification. Starch dissolution typically occurred approximately 45 minutes after the slurry reached 280°F (138°C). When the starch granules were essentially dissolved, the slurry was cooled to about 204°F (95.6°C) by passing cooling water through the reactor jacket. The reactor was then depressurized and unsealed. Twenty four pounds (10.8 kg) of DE 5 maltodextrin (Maltrin M040, Grain Processing Co., Muscatine, IA) was added and agitation continued until the maltodextin was completely dispersed. A sample was removed for sensory evaluation. 7.5 pounds (3.4 kg) filter aid (CELITE® HYFLO, Celite Corporation, Lompoc, CA) was added and the batch was held for 60 minutes before filtration through two filter presses in series. The first press (Model BT-240, Alsop Engineering Co., Kingston, NY) was dressed with four 24 square inch (155 cm²) (filter pads (A-10 filter media, Alsop Engineering Co., Kingston, NY). The filter press consisted of two 2-inch (5.1 cm) wide frames and one half-inch (1.3 cm) wide plate. The second press (Alsop Engineering Co., Kingston, NY) was dressed with four 113 square inch (729 cm²) carbon filter pads (S-51, grade 872 pads, Alsop Engineering Co., Kingston, NY). A sample was removed for sensory evaluation after removal of the diatomaceous earth and after the filtration through the carbon pads. The hot starch slurry was stored in 2 ounce (60 cm²) containers at 4°C overnight. The following day the samples were evaluated by a panel of trained experts. The samples were scored on a scale of 1 to 10, where 10 was the score for a sample with extreme off-flavor. The sensory results are shown in Table 1. The retrograded starch was spray dried and the proximate analysis are shown in Table 2.

**TABLE 1**

| Sample | Sensory Score |
|---|---|
| After addition of M040 | 5 |
| After removal of Celite | 4.5 |
| After carbon filtration | 3.5 |

**TABLE 2**

| Sample | Protein (%) | Moisture (%) | Fat (%) (Soxhlet) | Ash (%) | Carbohydrate (%) |
|---|---|---|---|---|---|
| Amy VII | 0.96 | 11.08 | 0.67 | 0.22 | 87.07 |
| After Carbon Filtration | 0.30 | 6.4 | < 0.1 | 0.20 | 93.1 |

### EXAMPLE 2

### INCREASED RESISTANCE OF RETROGRADED STARCH AFTER DEFLAVORING

A slurry of 70% amylose corn starch (AMYLOMAIZE® VII, American Maize-Products Company, Hammond, Indiana) was prepared in an agitated pressure vessel by mixing 21.1 lb (9.5 kg) of the starch with 250 pounds (112.5 kg) water. The slurry was cooked under high agitation to a temperature of 280°F (138°C), where it was held for 70 minutes before being cooled to 202°F (94°C).

The cooked starch slurry was split into two lots. An 11 pound (5.0 kg) sample of the cooked starch was removed and placed in a 2 gallons (7.6 liters), temperature controlled, agitated vessel and held at 140°F (60°C) to serve as the unfiltered control. The remaining starch in the cook vessel was filtered. First, 2.0 pounds (.90 kg) of diatomaceous earth (CELITE® HYFLO, Celite Corporation, Lompoc, California) was slurried into the cooked starch, and then held for one hour. Next, the starch/diatomaceous earth mixture was filtered through four 4 ft² (3700 cm²), carbon impregnated pads (type AC-30, die 154, Alsop Engineering Company, Kingston, New York) in a plate-and-frame filter press. The filtration was conducted at an average pressure drop across the filter of 10 psi (.68 atmospheres) (6.89 x 10⁴ Pa) and flow rate of 7.5-8.0 gallons/minute (28.4-30.3 liters/minute). The filtrate was returned to an agitated, temperature controlled vessel maintained at 140°F (60°C).

The two starch solutions were then processed according to the teachings of C.-W. Chiu, M. Henley and P. Altieri (European Patent Application 0,564,893/A1) to illustrate the effect of impurities removal on the yield of enzyme resistant starch. The control lot was adjusted to pH 5.02 with phosphoric acid. Then 7.0 grams of pullulanase (PROMOZYME™, Novo Industry A/S, Bagsvaerd, Denmark) were added. The enzyme was allowed to react for 2 hours at 140°F (60°C). The filtered lot was adjusted to pH 5.01 with phosphoric acid. Then 139.8 grams of pullulanase were added, and allowed to react at 140°F (60°C) for 2 hours. Resistant starch was allowed to form in both lots by holding at 167°F (75°C) for 18 hours. This also serves the function of inactivating the enzyme. The two lots of resistant starch were spray dried using 330°F (166°C) inlet air and 215°F (102°C) outlet air conditions.

The two lots of resistant starch were assayed for apparent total dietary fiber (AACC Method 32-07), Approved Methods of the American Association of Cereal Chemists, eighth edition, 1990, AACC, St. Paul, Minnesota). The unfiltered, control lot yielded 16.7% total dietary fiber. The filtered lot contained 23.4% total dietary fiber, representing a 40% yield increase in resistant starch due to the purification by filtration.

### EXAMPLE 3

### EXAMPLE OF PILOT SCALE PREPARATION OF STARCH-BASED TEXTURIZING AGENT

Six hundred seventy pounds (304.5 kg) of reverse osmosis, de-ionized (RODI) water was metered into a 100 gallon (378 liter) reactor (Lee Kettles, Phillipsburg, NJ) and heated to 43°C. Eighty-four pounds (38.2 kg) 70% amylose corn starch (AMYLOMAIZE® VII, American Maize, Hammond, IN) was weighed into the reactor with agitation. The final starch solids concentration was 10% (w/w). The reactor contents were agitated using a LIGHTNIN™ mixer (Model V5S18, Lightnin Mixers, Rochester, NY) with an A-100 propeller at 340 rpm. The pH of the suspension was adjusted to 4.56 using 15% phosphoric acid. The batch was heated from 43°C to 105°C in 14 minutes. The heating began with the vessel open to atmospheric pressure. The vessel was sealed by closing a vent valve when the product temperature reached 95°C. The temperature was then raised from 105°C to 138°C in 61 minutes. The product was held at 138°C for 60 minutes. The product was then cooled from 138°C to 95°C in 11 minutes by circulating 7°C chilled water through the reactor jacket. The product was maintained at 95°C by again adding steam to the jacket and the reactor was opened. 8.4 pounds (3.8 kg) of diatomaceous earth (Hyflo Supercel Celite, Celite Corporation, Lompoc, CA) and 25 pounds (11.4 kg) of maltodextrin (MALTRIN® M040, Grain Processing Corporation, Muscatine, IA) were added. The slurry was held for 60 minutes before filtering through two filter presses in series. The first press (Model BT-240, Alsop Engineering Co., Kingston, NY) was dressed with six 24" x 24" (61 cm x 61 cm) square filter pads (Grade A-10 filter media, Alsop Engineering Co., Kingston, NY). The press had two 2-inch (5.08 cm) wide frames and one-half inch (1.27 cm) wide frame installed between one-half inch (1.27 cm) wide filter plates. The second press (Alsop Engineering Co., Kingston, NY) was dressed with five 13 inch (33.0 cm) square carbon filter pads (1640 HC pads, Cellulo Corporation, Fresno, CA 93721). The presses had been preheated by circulating 95°C RODI water through them. The batch was pumped at 31.0 lb/min (14.1 kg/min) through the filter presses and into a holding kettle. The filtered starch solution was maintained at 91°C by applying steam to the holding kettle jacket. The starch solution was fed directly to a spray dryer (Crepaco Compact Spray Dryer, APV Crepaco Inc., Tonawanda, NY) using a progressive cavity pump (Netzch, Corp., Model #3NE10, Lionville, PA). The starch solution was atomized with a two fluid nozzle (Set Up 22B, Spraying Systems, Co., Wheaton, IL). Inlet and outlet air temperatures were 420°F (216°C) and 200°F (93°C), respectively. Product was a free-flowing white powder.

### EXAMPLE 4

### EXAMPLE OF PILOT SCALE PREPARATION OF STARCH-BASED TEXTURIZING AGENT WITHOUT MECHANICALLY DRIVEN FILTRATION

Two hundred fifty pounds (113.6 kg) of reverse osmosis, de-ionized) water was metered into a 30 gallon (115 liter) reactor (Lee Kettles, Phillipsburg, NJ) and heated to 43.8°C. Thirty pounds (13.6 kg) 70% amylose corn starch (AMYLOMAIZE® VII, American Maize, Hammond, IN) was weighed into the reactor with agitation. The final starch solids concentration was 10% (w/w). The reactor contents were agitated using a LIGHTNIN™ mixer (Model V5S18, Lightnin Mixers, Rochester, NY) with an A-310 impeller at 340 rpm. The pH of the suspension was adjusted to 4.47 using 15% phosphoric acid. The batch was heated from 43.8°C to 105°C in 14 minutes. The heating began with the vessel open to atmospheric pressure. The vessel was sealed by closing a vent valve when the product temperature reached 95°C. The temperature was then raised from 105°C to 138°C in 60 minutes. The product was held at 138°C for 60 minutes. The product was then cooled from 138°C to 95°C in 9 minutes by circulating 8°C chilled water through the reactor jacket. The product was maintained at 95°C by again adding steam to the jacket. The reactor was opened for the addition of three pounds (1.4 kg) of diatomaceous earth (Hyflo Supercel Celite, Celite Corporation, Lompoc, CA) and nine pounds (4.1 kg) of maltodextrin (MALTRIN® M040, Grain Processing Corporation, Muscatine, IA). The slurry was held for 60 minutes before filtering through two filter presses in series. The first press (Model BP-240, Alsop Engineering Co., Kingston, NY) was dressed with four 24" x 24" (61 cm x 61 cm) square filter pads (Grade A-10 filter media, Alsop Engineering Co., Kingston, NY). The press had one 2-inch (5.08 cm) wide frame and one half-inch (1.27 cm) wide frame installed between one-half inch (1.27 cm) wide filter plates. The second press (Alsop Engineering Co., Kingston, NY) was dressed with three 13 inch (33.0 cm) square carbon filter pads (1640 HC pads, Cellulo Corporation, Fresno, CA 93721). The presses had been preheated by circulating 95°C RODI water through them. The batch was pushed at 24 lb/min (10.9 kg/min) through the filter presses and into a holding kettle by pressurizing the feed kettle to 25 psig. The filtered starch solution was maintained at 83°C by applying steam to the holding kettle jacket. The starch solution was metered to a spray dryer (Crepaco Compact Spray Dryer, APV Crepaco Inc., Tonawanda, NY) using a progressive cavity pump (Netzch Corp., Model #3NE10, Lionville, PA). The starch solution was atomized with a two fluid nozzle (Set Up 22B, Spraying Systems Co., Wheaton, IL). Air atomization pressure was 60 psig. Inlet and outlet air temperatures were 319°F (159°C) and 220°C (104°C), respectively. Product was a free-flowing white powder.

### EXAMPLE 5

### SMALL SCALE PREPARATION OF TEXTURIZING AGENT

### METHOD 1: 5% STARCH SOLIDS BATCH

The procedure for producing the texturizing agent using a batch method is described below: 137.5 grams of 70% amylose corn starch (AMYLOMAIZE® VII starch, American Maize, Hammond, IN) was weighed into each of two 4 liter beakers. 2740 mL of deionized water was added to each beaker. The final starch solids concentration was 5% (w/v). The beakers were stirred using a LIGHTNIN® mixer (Lightnin Mixers, Rochester, NY, Model #TS1515) at approximately 250 rpm. The pH of the suspension was checked and adjusted to pH 4.5. The suspensions were then combined in a two gallon (7.6 liters) Parr reactor (Parr Instrument Co., Moline, IL, Model No. 4552) by transferring through a funnel into the reactor vessel which was stirred at 250 rpm. The batch was then heated to 138°C. After the batch temperature was 138°C for 60 minutes, a sample was taken for evaluation. A few mLs of the sample were withdrawn through the liquid sampling valve. Using an appropriate microscope at 250 fold magnification, the starch suspension was examined for the presence of remaining starch granules or granule fragments. If the starch granules were completely dissolved, the slurry was discharged from the reactor. If not, a sample was drawn every few minutes for evaluation until remaining starch granules were dissolved. Typical cook time at 138°C was 100 minutes. The contents of the reactor were discharged into a suitable receptacle. While monitoring the temperature, the slurry was homogenized using a Polytron homogenizer (Brinkman Instruments, Westbury, NY) outfitted with a PTA20S probe until the temperature of the slurry was 50°C. At this point, the slurry was opaque and white in appearance.

The product of this method was a predominately white gel-like paste which could be used directly in food formulations or could be further concentrated by centrifugation prior to use. This method yielded a product which exhibited a slight degree of mottled brown color and a pronounced rancid off-flavor.

### METHOD 2: 10% STARCH SOLIDS BATCH

A texturizing agent of slightly different functionality was prepared using Method 1 of Example 5 with a single change in procedure. The solids concentration of the batch was increased to 10% (w/v). Preparation of the texturizing agent under these conditions yielded a product of higher visual opacity and slightly lower viscosity than the texturizing agent produced at 5% solids in the reactor. Due to the higher concentration of starting material in the reactor vessel, the off-flavor and off-color were even more pronounced than in the batch of Method 1 produced at a lower solids concentration.

### METHOD 3: DEFLAVORED, DECOLORED BATCH

A substantially deflavored, decolored texturizing agent was produced by modification of Example 5, Method 2. The reactor vessel was evacuated prior to loading of the starch suspension. The starch suspension was then aspirated into the reactor vessel under vacuum. Prior to heating in the reactor vessel, the slurry was sparged with nitrogen for a period of ten minutes. All subsequent steps in the preparation of the texturizing agent were performed as described in Example 5, Method 1.

Method 3 yielded a texturizing agent that retained the structural and functional characteristics of the texturizing agents prepared by Example 5, Method 2; however, the off-flavor and off-color had been greatly reduced relative to the agents produced from a starch suspension that had not been deaerated, sparged and cooked under inert atmosphere.

### METHOD 4: LOW pH BATCH

The preparation of texturizing agent was identical to that described in Example 5, Method 1 except the pH of the starting material had been adjusted to pH 3 with hydrochloric acid. The texturizing agent produced at this lower pH was of much higher opacity and much lower viscosity than those produced at pH 4.5 at 5 or 10% starch solids.

### METHOD 5: 50% AMYLOSE STARCH AS STARTING MATERIAL

The texturizing agent was produced as described in Example 5, Method 3, except that the starting material was changed to AMYLOMAIZE® V. AMYLOMAIZE® V has an amylose content of about 50% as opposed to the 70% amylose-containing starch used in Methods 1 through 4.

### EXAMPLE 6

### PREPARATION OF TEXTURIZING AGENT

### METHOD 1: BATCH MODE

Five hundred fifty grams of 70% amylose corn starch (AMYLOMAIZE® VII, American Maize, Hammond, IN) was weighed into two 4 liter beakers. 2602 mL of deionized water was added to each beaker. The final starch solids concentration was 11.6% (w/v). The beakers were agitated using a LIGHTNIN® mixer (Lightnin Mixers, Rochester, NY Model #TS1515) at approximately 250 rpm. This was sufficient to suspend the starch uniformly. The pH of the suspension was adjusted to 4.5 with 1M phosphoric acid. The suspensions were then combined in a two gallon (7.6 liters) Parr reactor (Parr Instrument Co., Moline, IL, Model #4552) by syphoning into the vessel. The reaction vessel was stirred at 356 rpm. The starch slurry and reactor was then purged of substantially all oxygen by bubbling nitrogen through a dip tube. Measured oxygen content in the exiting gas was 47 ppm. The reactor was then sealed and heated to 138°C. After the batch temperature was held at 138°C for 30 minutes, a sample was taken to check the progress of the starch granule dissolution. A few milliliters of the sample were withdrawn through a liquid sampling valve. Using a microscope at 250 fold magnification, the starch suspension was examined for the presence of remaining starch granules or granule fragments. The starch granules were essentially dissolved and the slurry was cooled to less than 100°C by passing cooling water through an internal coil.

The starch slurry cooled to 95°C was passed through a 10 micron filter (Grade A10, Alsop Engineers, Kingston, NY) to remove undissolved impurities. The filter holder and media were pre-heated with hot water prior to starch slurry filtration. This was done to prevent premature retrogradation of the starch on the filter media and consequent blinding of the filter. Filtered starch slurry was collected in a metal beaker.

The filtered starch slurry was processed through a two-staged homogenizer (APV-Gaulin Model # 15MR-8TBA, Wilmington, MA). The homogenization pressure was set at 3000 psig (20 78 x 10⁶ Pa). At this point the slurry was opaque and white in appearance. The homogenate was then allowed to cool overnight inside a cold room regulated at 4°C. The product at this point is a white stiff gel which can be used directly in food formulations or can be dried to a powder using various drying techniques. In particular, spray drying of the gel produces a free-flowing powder that is readily hydrated in water.

The starch paste was too stiff for direct feeding to a spray dryer. It had to be sheared into a more flowable form. It was diluted to approximately 7% (w/w) solids using deionized water. This was fed to a spray dryer (Niro Model # 1291, Columbia, MD) which was fitted with a centrifugal atomizer. Inlet air temperature was regulated to maintain outlet air temperature at 100°C.

### METHOD 2: BATCH MODE; USE OF AN EXCIPIENT

A 700 gallons (2650 liters) stainless steel tank was charged with 624 gallons (2360 liters) of softened water heated to 110°F (43°C). Under moderate agitation, 700 pounds (315 kg) of 70% amylose starch (AMYLOMAIZE® VII, American Maize, Hammond, IN) was carefully added to the water. The final starch solids concentration was 10.7% (w/v). The pH of the starch slurry was adjusted to 4.5 with 75% (w/w) phosphoric acid. The starch slurry was transferred to an 800 gallon (3630 liters) pressure reactor (Northland Stainless) which was mixed with a dual impeller agitator (Lightnin Mixers, Model # XJC65, Rochester NY). The reactor was sealed. Oxygen was purged from the reactor and starch slurry by repeated evacuations of the head space and sparging the liquid phase with nitrogen. Vacuum was pulled to a minimum of 25 inches (636 mm) Hg (8.46 x 10⁴ Pa). Nitrogen was sparged into the vessel through a dip tube into the liquid phase. The nitrogen was sparged until the vessel pressure reached 2 inches (50.8 mm) Hg (6.77 x 10³ Pa) vacuum. This process was repeated until oxygen content in the liquid phase was less than 0.8 ppm. The vessel was then evacuated an additional time. The reactor temperature was raised to 138°C as quickly as possible. After the batch temperature was held at 138°C for 15 minutes, a sample was taken to check the progress of the starch granule dissolution as described in Method 1. Starch dissolution typically occurred 30 minutes after reaching 138°C. When the starch granules were essentially dissolved, the slurry was cooled to about 88°C by passing cooling water through the reactor heating jacket. A 24-inch (61 cm) square plate and frame filter press was fitted with 10 micron filter pads (Grade A10, Alsop Engineering, Kingston, NY). Eleven or twelve frames were used to filter a batch. The press and filter media were pre-heated with softened water until the outlet temperature was greater than 77°C. The starch slurry was then pumped through the press. The filtered starch slurry was collected in a 700 gallon (2650 liters) jacketed agitated vessel (Cherry Burrell, Louisville, KY). The filtrate was maintained at about 82°C.

An excipient was added to the starch slurry at this point. To the starch slurry, 210 pounds (94.5 kg) of 5 DE maltodextrin (LoDex 5, American Maize, Hammond, IN) was added and stirred until dissolved. The starch slurry was processed through a single stage homogenizer operating at 3000 psig (20.78 x 10⁶ Pa) (APV-Gaulin, Model # 250-M6-8TBS, Wilmington, MA). Homogenate was collected in drums which were stored in a cold room to complete the retrogradation process. The cold room temperature was regulated at 4°C.

The product at this point was a stiff white gel-like paste. It was diluted with 1 part water to 3 parts paste and mixed in a 300 gallon (1140 liters) jacketed mixer (Groen Model # DV/TA-400, Elk Grove Village, IL). The additional water and mixing transformed the paste into a flowable, pumpable fluid that was fed to a spray dryer. The spray dryer was operated at an outlet temperature of about 104°C. High pressure nozzles (Nozzle #58, Core #21; Spraying Systems Co., Wheaton, IL) were used to atomize the product. The product was a free-flowing white powder.

### METHOD 3: BATCH MODE USING FILTER AID AND EXCIPIENT

A stainless steel reactor was charged with 75 gallons (284 liters) of reverse osmosis water. Under moderate agitation, 34.1 kg of 70% amylose starch (AMYLOMAIZE® VII, American Maize, Hammond, IN) was added. The pH of the starch slurry was adjusted to 4.5 using 0.6N phosphoric acid. The reactor was sealed. Oxygen was purged from the reactor and starch slurry by eight repeated evacuations of the head space and sparging the liquid phase with nitrogen. Vacuum was pulled to a minimum of 25 inches (635 mm) Hg. Nitrogen was sparged into the vessel through a dip tube into the liquid phase. The nitrogen was sparged until the vessel pressure reached 2 inches (50.8 mm) Hg (8.46 x 10⁴ Pa) vacuum. At the end of this program, the oxygen content in the liquid phase was less than 1.0 ppm. Under agitation, the vessel contents were heated to 138°C. After the batch temperature was held at 138°C for 30 minutes, a sample was taken to check the progress of the starch granule dissolution as described in Method 1. Starch dissolution typically occurred 45 minutes after reaching 138°C. When the starch granules were essentially dissolved, the slurry was cooled to about 95°C by passing cooling water through the reactor jacket. The reactor was then depressurized and unsealed. A filter aid (Celite Hyflo, Celite Corp., Lompoc, CA) was added to the hot starch slurry. As much as 9.6 kg of Celite was added to ensure smooth filtration. A 1 foot (30.5 cm) square plate and frame press was prepared with coarse papers and cloths. Ten frames were used to process one batch. The press was preheated with hot water to minimize starch retrogradation on the filter media. The starch slurry was recirculated through the press and returned to the reaction vessel until the filtrate was clear of filter aid. At that point, the filtrate was collected in an agitated, jacketed vessel.
To the filtrate, 10.2 kg of 5 DE maltodextrin (Maltrin M040, Grain Processing Co., Muscatine, IA) was added and agitated until completely dispersed. The starch solution was processed through a two-staged homogenizer (APV-Gaulin, Model # 15NR-8TBA, Wilmington, MA). The homogenizer was operated at 3000 psig (20.78 x 10⁶ Pa). The homogenate was collected in pails. The retrogradation process was continued overnight in a cold room which was maintained at 4°C.

### METHOD 4:

A homogenized starch slurry was prepared as described in Method 3. The output from the homogenizer was fed to a belt flaker (Sandrik, Tolowa, NJ). The belt 20 inch by 12 foot (50.8 cm by 30.5 cm) flaker was cooled with water sprays of 10°C. The residence time ( ca. 2 minutes) on the belt was adjusted to produce a set gel on the discharge end. The product temperature leaving the belt flaker was about 12°C. This material was collected into pails and stored in a cold room to complete the retrogradation process. The cold room was regulated at 4°C.

### EXAMPLE 7

### LIPID CONTENT DETERMINATION

Due to the likelihood that the off-flavors and off-colors observed in the texturizing agent prepared in Example 5, Methods 1 and 2 were produced via lipid oxidation or degradation, the starting material, AMYLOMAIZE® VII (American Maize, Hammond, IN) was analyzed for lipid content in the following manner: 50 grams of AMYLOMAIZE® VII were dispersed in 200 mL of 2% sulfuric acid (w/v). The suspension was heated 70°C for 7 hours with stirring followed by slow cooling to room temperature and overnight incubation. A white slurry was observed at this point due to unhydrolyzed starch, therefore, the slurry was transferred to a 500 mL round bottom flask and the slurry was heated and refluxed for 4 to 5 hours. At this point a brown solution was obtained. The solution was allowed to cool and stand at room temperature overnight and was then neutralized with 2 N NaOH (approximately 77 mL). The solution was transferred quantitatively into a 1L separatory funnel and extracted with 300 mL of hexane. The extraction was repeated 3 more times and the hexane extracts were combined and dried by passing over sodium sulfate. The hexane extract was evaporated to dryness leaving a fat-like residue. The residue was further air-dried overnight. The weight of the hexane extract was 0.35 grams indicating a lipid content of at least 0.7% (w/v) in the AMYLOMAIZE starting material.

### EXAMPLE 8

### DETERMINATION OF RESISTANCE TO ENZYME DIGESTION

The purpose of this experiment was to determine the resistance to enzyme digestion of the texturizing agent prepared according to the method of Example 5, Method 2. The resistance to enzyme digestion is an indication of the degree of retrogradation (crystallinity) within the starch polymer.

The content of reducing sugars of each sample was determined using the Somogyi-Nelson Colorimetric Assay. [Somogyi-Nelson, M. (1945) J. Biol Chem. Vol. 160:61-68] For each sample to be analyzed, 25 mg of starch solids was weighed into a tared test tube to which 1.88 mL of sodium acetate buffer (pH 4.7) was added. The samples were then centrifuged at 3,000 rpm for 5 minutes in a benchtop centrifuge (Damon, Needham Heights, MA Model IEC-7R). Immediately following centrifugation, a 10 mL aliquot of each sample was removed and diluted to 0.5 mL with distilled water and assayed for the determination of reducing sugars prior to enzyme digestion.

To determine the reducing sugar content subsequent to enzyme treatment, an aliquot (60 µL) of glucoamylase (Diazyme L-200, Solvay Enzymes, Inc., Elkhart, IN) and an aliquot (60 µL) of α-amylase (Clarase L-40,000, Solvay Enzymes, Inc., Elkhart, IN) were added to the samples. The samples were then mixed on a Vortex mixer (Scientific Industries, Bohemia, NY) for a few seconds. The remainder of the samples were then placed in an incubator-shaker (Lab-Line, Melrose Park, IL, Model #3526) thermostatted to 50°C with shaking set at 200 to 250 rpm. To follow rate and/or extent of reaction, 10 µL aliquots were removed and diluted to 0.5 ml with distilled water and assayed as a function of time for up to 24 hours. The samples were centrifuged as described above prior to each removal of the 10 µL sample to precipitate any undigested starch that may be present in the sample. Appropriate solvent blanks were prepared according to the preceding protocol. The results are presented in Table 3 below:

**TABLE 3**

| | Reducing Sugar Content (% w/w) |
|---|---|
| Starting Material (AMYLOMAIZE® VII) | <1 |
| Texturizing Agent prior to enzyme digestion | <1 |
| Texturizing Agent after 5 hours of enzyme digestion | 85±3 |
| Texturizing Agent after 24 hours of enzyme digestion | 98±10 |

The lack of reducing sugars in the texturizing agent, above background, prior to enzymatic hydrolysis indicated that little, if any, degradation of the starch polymer occurred during processing of the high amylose starch into the texturizing agent. The susceptibility of the texturizing agent to complete enzyme hydrolysis following 24 hours of incubation indicated the absence of crystalline regions within the starch matrix.

### EXAMPLE 9

### BAKED CHEESECAKE

### METHOD 1: SMALL SCALE BATCH (500 g)

A reduced fat, reduced calorie baked cheesecake containing less than 0.8% total fat was prepared from the texturizing agent prepared in Example 5, Method 3 using the following formula:

| Ingredient | Weight Percentage |
|---|---|
| Water | 44 |
| Baker's Cheese | 27 |
| Sugar | 15.6 |
| Maltodextrin (DE=10) | 5.2 |
| Nonfat Dry Milk | 3.48 |
| Egg white solids | 2.0 |
| Texturizing agent (dsb) | 1.0 |
| Vanilla | 0.73 |
| Butter base flavor | 0.31 |
| Carrageenan | 0.20 |
| Lecithin | 0.20 |
| Salt | 0.10 |
| Xanthan Gum | 0.05 |

The ingredients were processed as follows: A prehydrate blend was prepared with the xanthan gum, texturizing agent and water. Using a kitchen blender (Oster/Sunbeam Appliance Co., Memphis, TN, Model: OSTERIZER™ 10 speed) at high speed, slowly add xanthan gum and a portion of the sugar. The gum was blended for 7 minutes. The texturizing agent was added slowly to the xanthan slurry and blended at high speed for 15 minutes. The blend was then allowed to sit for at least one hour at 40°F (4.5°C).

In a separate container, the remaining dry ingredients were mixed. In another container the cheese and flavors were also combined. The cheese/flavors mixture was blended (KitchenAid, St. Joseph, MI, Model KSM 90) slowly for 2 minutes stopping at the half way point to scrape down the sides of the bowl with a spatula. The dry blend was then added and mixed for about 2 minutes at slow speed to disperse, again stopping after about one minute to scrape the sides of the bowl. Approximately one-half of the xanthan gum/texturizing slurry was added and blended for about 30 seconds. The remainder of the xanthan gum/texturizing agent mixture was then added. The combined ingredients were then mixed for an additional five minutes, scraping the sides of the bowl often with a spatula.

Aluminum pans (6.5 inch or 16.5 cm diameter) were prepared by greasing the bottoms and layering with from 8 to 10 grams of finely milled crust crumbs (A&D Ingredients, Co., East Brunswick, NJ). The pans were filled by hand with finished batter (approx. 500 grams) and the cheesecakes were baked at 350°F (177°C) for about one hour or until lightly golden brown. The cheesecakes were then cooled to room temperature for approximately 2 hours and placed in a freezer for storage. The cheesecakes prepared by this method have a fat content of <0.8% (due to the small amount of fat introduced by the use of baker's cheese, lecithin and flavor) as compared to 23% or higher fat in the typical full-fat cheesecake for a reduction in fat content of approximately 99% and a caloric reduction of 62%. From a sensory standpoint, the cheese-cakes were of high quality and exhibited good mouthfeel and viscosity, no syneresis, good freeze/thaw stability, and flavor.

### METHOD 2: PLANT SCALE BATCH (60 POUNDS) (27 KILOGRAMS)

Baked cheesecake was prepared using the same formulation (on a weight percentage basis) and essentially the same procedure as presented in Example 9, Method 1, but on a large scale. Blending of ingredients was achieved using a plant scale mixer (Hobart Corp., Troy, OH) followed by baking in an industrial gas-fired, rotating oven. The large scale processing under plant conditions resulted in cheesecakes of improved quality relative to those produced on the small scale as described in the previous method.

### EXAMPLE 10

### NO-BAKE CHEESECAKE

A reduced fat, reduced calorie no-bake cheesecake containing less than 1.8% total fat was prepared from the texturizing agent prepared by the method of Example 5, Method 3 using the following formula:

| Ingredients | Weight Percentage |
|---|---|
| Water | 40 |
| Baker's cheese | 29.2 |
| Sugar | 15.0 |
| Neufchatel cheese | 6.4 |
| Non-fat milk solids | 3.35 |
| Egg white solids | 2.0 |
| Texturizing agent (dsb) | 1.0 |
| Gelatin (Bloom 225) | 1.0 |
| Vanilla | 0.7 |
| Lecithin | 0.2 |
| Salt | 0.1 |
| Xanthan gum | 0.05 |

The ingredients were processed in the following manner: the gelatin was heated with approximately 25% of the make-up water to 160°F (71°C) and allowed to cool to 140°F (60°C). In a separate container, the xanthan gum was blended with approximately 25% of the water and mixed for 10 minutes using a Virtis mixer (The Virtis Company, Inc., Gardner, NY, Item #176057). The remaining water was blended with the texturizing agent and mixed for 10 minutes using the Virtis mixer. The xanthan/water and texturizing agent/water blends were then combined and mixed for an additional 5 minutes.

Using a kitchen blender (KitchenAid, St. Joseph, MI), the cheeses were blended. The dry ingredients and vanilla were then added and mixed for 3 to 5 minutes until uniformly dispersed. The texturizing agent/xanthan gum/water blend was then added and the combined ingredients were mixed for 1 minute at speed 2. The hot gelatin (140°F; 60°C) was then mixed into the batter for 1 minute at speed 2. The batter was transferred to plastic dishes (3.75 x 3.75 inches or 9.5 cm x 9.5 cm) which had been previously lined on the bottom with 1.5 to 2 grams of graham cracker crumbs. The cakes were then placed in a 4°C refrigerator, allowed to set, and subsequently stored in a -20°C freezer until thawed and consumed.

The resultant no-bake cheesecake had a fat content of 2.6% and exhibited good mouthfeel and flavor.

### EXAMPLE 11

### CHOCOLATE MOUSSE

### METHOD 1: SMALL SCALE BATCH (∼ 1 POUND) (ABOUT .45 KILOGRAMS)

A reduced fat, reduced calorie chocolate mousse containing less than 1.1% total fat was prepared from the texturizing agent prepared in Example 5, Method 3 using the following formula:

| Ingredients | Weight Percentage |
|---|---|
| Water | 69.1 |
| Non-fat Dry Milk solids | 11.5 |
| Sugar | 11.5 |
| Cocoa Powder | 3.8 |
| Stabilizer Mix* | 2.8 |
| Texturizing agent | 1.25 |
| Vanilla Extract | 0.1 |

| | |
|---|---|
| *Stabilizer Mix: Cremodan Mousse Mix, Grinsted, Industrial Airport, KS | |

The texturizing agent was blended with the water until well dispersed. The dry ingredients were combined and then added to the texturizing agent/water mixture in a kitchen blender. The combined ingredients were blended until uniformly dispersed. The mixture was then heated to 180°F (54°C) and held for 30 seconds at that temperature. The heated mixture was then homogenized using a Polytron Homogenizer Model PT10/35 fitted with a PT20S generator (Brinkman Instruments, Westbury, NY) at 16,000 rpm for one minute. The mixture was then cooled to 100°F (38°C) on ice while continuing to homogenize at 10,000 rpm. The homogenate was further cooled to 40°F (4°C), then whipped for five minutes at high speed using a KitchenAid mixer (KitchenAid, St. Joseph, MI). Overrun was typically in the range of 80 to 160%.

The low amount of fat in the resultant mousse (4.1%) was contributed by that present in the cocoa powder and stabilizer mix. The fat-reduced mousse was evaluated and found to have acceptable organoleptic properties. The texturizing agent was found to contribute significantly to foam formation, foam stability, smoothness and viscosity, as compared to a negative control. No off-flavors were detectable and the mousse exhibited no unpleasant after-taste. Based on a comparison with the typical 10% fat control, the fat and caloric contents have been reduced by 90 and 46%, respectively.

### METHOD 2: PILOT SCALE BATCH (120 POUNDS) (54 KILOGRAMS)

Chocolate mousse was prepared using the same formulation and essentially the same procedure as presented in Example 11, Method 1 but on a larger scale. Blending of ingredients was performed using a Norman mixer followed by homogenization with a Gaulin two-stage homogenizer (APV Gaulin, Chelsea, MA). The homogenate was processed using a continuous whipper. By varying the product temperature and nitrogen incorporation, the degree of overrun was controlled. Specifically, overrun values of 30, 60 and 142% were achieved. The mousse produced on a large scale was of similar organoleptic quality as that produced in Example 11, Method 1.

### EXAMPLE 12

### REDUCED-FAT SAUCES

### METHOD 1: REDUCED FAT ALFREDO SAUCE

A reduced fat, reduced calorie Alfredo sauce containing less than 13% total fat was prepared from the texturizing agent produced in Example 5, Method 3 using the following formula:

| Ingredients | Weight Percentage |
|---|---|
| Skim milk | 51.6 |
| Grated Parmesan cheese | 27 |
| Water | 10.9 |
| Sweet butter | 8.0 |
| Texturizing agent | 2.3 |
| Xanthan gum | 0.2 |

The texturizing agent and xanthan gum were mixed with the skim milk in a kitchen blender at 90°C (KitchenAid, St. Joseph, MI) until uniformly dispersed. The agent mixture was mixed for an additional two minutes at high speed and mixed for an additional three minutes. The butter was then blended in at high speed. The entire mixture was transferred to a heating vessel and slowly brought to a simmer (150 to 160°F; 68°C). Grated Parmesan cheese was then added slowly to the blend while mixing with a whisk. The finished sauce was then pasteurized at 83°C for 30 seconds before freezing.

The sauce produced by this method was of very high quality, had excellent taste, mouthfeel, appearance, viscosity, and freeze/thaw stability. The fat content of the final product (15%) represented a 60% percent reduction from the fat content of a typical full-fat Alfredo sauce (38%) The caloric reduction was 48%.

### METHOD 2: REDUCED-FAT BUTTER SAUCE

A reduced-fat, reduced-calorie butter sauce containing 1% total fat was prepared from the texturizing agent prepared in Example 5, Method 3 using the following formula:

| Ingredients | Weight Percentage |
|---|---|
| Water | 95.8 |
| Texturizing agent (dsb) | 2.0 |
| Salt | 1.0 |
| Butter base 20* | 1.0 |
| Xanthan Gum | 0.2 |

| | |
|---|---|
| *Butter base 20 (Cumberland Packaging Company, Racine, WI) | |

The ingredients were combined in a kitchen blender (Oster/Sunbeam Appliance Co., Memphis, TN) and blended at high speed for 2 minutes. The blend was transferred to a glass container and heated in a microwave oven (General Electric Co., Louisville, KY, Spacemaker Model set at power level 10) for 22 seconds. After heating, the sauce was stirred by hand.

The texturizing agent provided body, viscosity and opacity to the reduced-fat sauce.

### EXAMPLE 13

### METHOD 1: FAT-FREE MAYONNAISE

A reduced fat, reduced calorie mayonnaise was prepared from the texturizing agent produced by the method described in Example 5, Method 1 using the following formula:

| Ingredients | Weight Percentage |
|---|---|
| Water | 83.6 |
| Texturizing Agent | 5.67 |
| Vinegar | 7.0 |
| Xanthan gum | 0.1 |
| β-carotene | 0.007 |
| Salt | 1.8 |
| Sugar | 2.75 |
| EDTA | 0.0075 |
| Potassium sorbate | 0.1 |
| Potassium benzoate | 0.1 |

The β-carotene, texturizing agent, and approximately half of the water was blended using a KitchenAid blender (KitchenAid, St. Joseph, MI, Model K45SS) at speed 2 for 5 minutes. The xanthan gum, vinegar and remaining water were simultaneously blended for 5 minutes at half speed using a Virtis mixer (The Virtis Company, Inc., Gardner, NY, Item #176057). The two mixtures were combined in the KitchenAid blender and mixed for an additional 5 minutes at speed 2. The mixture was then passed through a colloid mill (Premier Mill Corp., Temple, PA, Model KCD). The resultant mayonnaise is then deaerated in a Power Mixer with Vacuum (Whip Mix Corp., Louisville, KY).

This formulation and process yielded a mayonnaise with good opacity, acceptable mouthfeel and viscosity, and good storage stability; however, due to the greater percent incorporation of texturizing agent, the off-flavors inherent in the product of Example 5, Method 1, were detectable in the formulated mayonnaise. A 100% reduction in fat content was achieved relative to a typical 80% full fat mayonnaise with a caloric reduction of 90%.

### METHOD 2: FAT-FREE MAYONNAISE OF REDUCED OFF-FLAVOR

Mayonnaise was prepared as in Example 13, Method 1 except using texturizing agent produced as described in Example 5, Method 3. The mayonnaise produced with this texturizing agent had improved flavor attributes relative to mayonnaises prepared using texturizing agents prepared as described in Example 5, Method 1.

### METHOD 3: REDUCED FAT (3%) MAYONNAISE

Mayonnaise was prepared as in Example 13, Method 2 except soybean oil was added to a level of 3% by weight to the formulation. The 3% oil mayonnaise exhibited smoother mouthfeel, improved lubricity and increased opacity.

### METHOD 4: REDUCED-FAT (10%) MAYONNAISE

Mayonnaise was prepared as in Example 13, Method 2 except soybean oil was added to a level of 10% by weight to the formulation. The 10% oil mayonnaise exhibited further improvement in mouthfeel, lubricity, and opacity relative to the 3% oil mayonnaise prepared in the previous example.

### METHOD 5: REDUCED-FAT MAYONNAISE WITH ADDED EGGS

The 0, 3 and 10% oil mayonnaises were prepared as in Example 13, Methods 2, 3 and 4, except liquid egg yolk was added to the formulation at a level of 5.8% by weight. In all cases, the overall appearance and organoleptic qualities of the reduced-fat mayos were enhanced especially regarding increased opacity and flavor.

### EXAMPLE 14

### FAT FREE SALAD DRESSING

### METHOD 1: CREAMY ITALIAN SALAD DRESSING

A fat-free, reduced calorie Creamy Italian salad dressing was prepared from the texturizing agent produced by the method described in Example 5, Method 2 using the following formula:

| Ingredients | Weight Percentage |
|---|---|
| Skim milk | 39.1 |
| Water | 31.0 |
| Vinegar (50 grain) | 20.0 |
| Sugar | 3.8 |
| Texturizing agent | 3.0 |
| Salt | 2.0 |
| Garlic powder | 0.3 |
| Red pepper pieces (8 +40) | 0.3 |
| Onion powder | 0.15 |
| Xanthan gum | 0.1 |
| Potassium sorbate | 0.1 |
| Sodium benzoate | 0.1 |
| Oregano flakes | 0.03 |
| Calcium disodium EDTA | 0.0075 |

The ingredients were processed in the following manner: The xanthan gum and water were mixed for 10 minutes using a LIGHTNIN® mixer (Lightnin Mixers, Rochester, NY) at speed 3. The remaining dry ingredients, except the red pepper and oregano, were then added and mixed for an additional 5 minutes. The texturizing agent was blended in at speed 6 and the blend was mixed for 5 minutes. The mixture was then passed through a colloid mill (Premier Mill Corp., Temple, PA, Model KCD). The resultant salad dressing was then deaerated in a Power Mixer with Vacuum (Whip Mix Corp., Louisville, KY). As a final step, the red pepper and oregano were mixed in by hand.

The fat-free Creamy Italian salad dressing produced by this method exhibited good opacity and viscosity, as well as acceptable flavor and mouthfeel.

### METHOD 2: THOUSAND ISLAND SALAD DRESSING

A fat-tree reduced calorie Thousand Island salad dressing was prepared from the texturizing agent produced by the method described in Example 5, Method 3 using the following formula:

| Ingredients | Weight Percentage |
|---|---|
| Water | 44.0 |
| Skim milk | 20.0 |
| Sugar | 12.5 |
| Vinegar (100 grain) | 8.0 |
| Vinegar (red wine) | 5.0 |
| Tomato paste | 3.5 |
| Texturizing agent | 3.0 |
| Egg yolk | 2.5 |
| Salt | 1.8 |
| Lemon juice | 0.5 |
| Xanthan gum | 0.15 |

The milk, water, egg yolks and xanthan gum were combined and mixed for 10 minutes using a Virtis mixer at speed 5 (The Virtis Company, Inc., Gardner, NY, Item #176057). In a separate container, the remaining ingredients were combined and blended for 5 minutes in a kitchen blender (KitchenAid, St. Joseph, MI, Model K45SS) at speed 2. The mixture was then passed through a colloid mill (Premier Mill Corp., Temple, PA, Model KCD). The resultant salad dressing was then deaerated in a Power Mixer with Vacuum (Whip Mix Corp., Louisville, KY). As a final step, the red pepper and oregano were mixed in by hand.

The fat-free Thousand Island salad dressing produced by this method exhibited good opacity and viscosity as well as acceptable flavor and mouthfeel.

### EXAMPLE 15

### REDUCED-FAT SPREAD

A reduced fat, reduced calorie margarine-type spread containing approximately 20% total fat was prepared from the texturizing agent prepared in Example 6, Method 3 using the following formula:

| Ingredients | Weight Percentage |
|---|---|
| Water | 74.74 |
| Soy bean oil | 15 |
| Soy bean flake | 5.0 |
| Texturizing agent | 3.2 |
| Salt | 1.2 |
| Monoglyceride (Dimodan LSK) | 0.65 |
| Sodium benzoate | 0.1 |
| Potassium sorbate | 0.0075 |

The spread was prepared by combining the texturizing agent, water, salt, sodium benzoate, potassium sorbate, and EDTA and heating to 180°F (82.2°C). The remaining ingredients were combined in a separate container and heated to approximately 125°F (52°C). The two mixtures were combined, stirred and allowed to cool to 90°F (32.2°C). The solution was then transferred to a blender and mixed at high speed for 60 seconds. The solution was then transferred to a suitable container which was placed in an ice bath and stirred until the emulsion was set up.

The resulting spread was 75% fat-reduced relative to an 80% full fat control. The spread exhibited excellent melting characteristics in a frying pan, especially in regards to lack of spattering. The spread melted well on toast, had excellent mouthfeel, smoothness and acceptable stability.

### EXAMPLE 16

### LOW-FAT CHOCOLATE FROSTING

A reduced fat, reduced calorie chocolate frosting containing 2% fat was prepared from the texturizing agent using the following formula:

| Ingredients | Weight Percentage |
|---|---|
| Starch product (Example 6, Method 3) | 4.30 |
| Bottled Water | 24.60 |
| Corn Syrup Solids (GPC Maltrin M200) | 18.00 |
| Emulsifier | 1.00 |
| Shortening (Van Den Bergh's CREAMTEX®) | 1.00 |
| Powdered Sugar (10X) | 43.10 |
| Coca Powder (DeZaan Defatted Type S) | 6.00 |
| Caramel Color (Williamson #604) | 1.50 |
| Salt (Retail Grade) | 0.50 |
| Total | 100.00 |

The texturizing agent was processed with standard kitchen equipment as follows:
1. Weigh the starch product and corn syrup solids into 2 separate containers and set aside.
2. Dry blend the remaining dry ingredients and set aside.
3. Add boiling water to a mini-food processor (Sunbeam Oskar Jr., Chopper Plus). Slowly add the starch product while shearing. Once dispersed, shear for an additional 10 seconds.
4. Add corn syrup solids and shear the 2 minutes to disperse. Scrape the sides of the mini-food processor as needed.
5. Combine the emulsifier and shortening. Heat until melted. Add to the above mixture while shearing for another 2 minutes.
6. Transfer the contents of the mini-food processor to the bowl of a KitchenAid mixer, equipped with the paddle attachment.
7. Add the dry blend. Mix on speed 1 for 1 minute. Increase to speed 10 and mix for 5 minutes. Scrape the sides of the mixer as needed.

The frosting produced by this method was of very high quality and had excellent texture, appearance and peaking characteristics. Comparison against a meltodextrin solids control verified the unique fat-like and bulking characteristics of the texturizing agent.

Oven-baked cakes were frosted and tested for slippage of the frosting during accelerated storage (24 hours at 100°F (38°C), 60% relative humidity). The frosting prepared with this ingredient showed virtually no slippage while commercially made low and full-fat frostings showed appreciable slippage from the cakes.

### EXAMPLE 17

### NO-FAT SOUR CREAM

A no-fat sour cream was prepared from the texturizing agent using the following formulation:

| Ingredients | Weight Percentage |
|---|---|
| Skim Milk | 96.10 |
| Starch product (Example 6, Method 3) | 3.50 |
| Non-Fat Dry Milk | 0.40 |
| | 100.00 |

The sour cream mix was prepared and processed in the following manner:
1. Weigh accurately the wet ingredients and dry ingredients separately.
2. Heat the wet ingredients in a batch pasteurizer to 110°F (43°C) and add the mixture of dry ingredients with continuous high speed mixing using LIGHTNIN® mixer.
3. Raise the temperature to 190°F (88°C) and hold for about 5 minutes, followed by homogenization at 2000 psi (1st stage) and 500 psi (2nd stage) pressures using a Gualin homogenizer.
4. The samples are heated again to 175°F (79°C) to repasteurize and immediately cooled to 78°F (26°C) before inoculation with sour cream starter culture.
5. After inoculation samples are incubated at 78°F (26°C) for 18 to 20 hours followed by cooling at 40°F (4°C) for 16 to 18 hours.

The texturizing agent processed with this method will produce an excellent quality no fat sour cream which have sensory attributes, stability, set and opacity characteristics superior to existing commercial products. The product can be made easily with existing sour cream production equipment and the ingredient statement is clean.

### EXAMPLE 18

### HALF-FAT PEANUT BUTTER SPREAD

A half-fat peanut butter spread was prepared from the texturizing agent using the following formulation:

| Ingredients | Weight Percentage |
|---|---|
| Peanut Butter | 50.00 |
| Starch product (Example 6, Method 3) | 2.00 |
| Bottled Water | 48.00 |
| | 100.00 |

The spread was prepared and processed in the following manner:
1. Heat the water to 100°C and place in a standard kitchen blender jar.
2. Slowly add the texturizing agent while mixing on high speed. Once dispersed, mix for five minutes.
3. Immediately transfer the paste into a bowl of a small mini-food processor (Sunbeam Oskar Jr., CHOPPER PLUS®); add peanut butter and mix until uniformly blended (about 3 minutes).

The texturizing agent processed with this method will produce an excellent quality half-fat peanut butter spread which has sensory and stability attributes that are similar to full-fat peanut butter. The product can be made easily with existing commercial equipment and the ingredient statement is clean.

### Processed Cheese Examples

### Materials

- Maltodextrin M100 (DE=10) manufactured by Grain Processing Corporation.
- Pregelatinized, high amylose starch based texturizing agent (OPTAGRADE®) manufactured by Opta Food Ingredients, Inc. and prepared according to Example 3.
- Microcrystalline cellulose (Novagel RCN-10) manufactured by the FMC Corporation.
- Carrageenans (Gelcarin GP 911 and Seakem GP 418) manufactured by the FMC Corporation.
- High flavored, enzyme modified cheddar cheese prepared with a blend of enzymes and comprising cheddar cheese, water, inactivated enzymes, sodium citrate, disodium phosphate and starter distillate (27% fat; 43% moisture), commercially available under the name Chedr Pow'r from Chr. Hansen's Laboratory Inc.

### EXAMPLE 19

### PREPARATION OF PROCESSED CHEESE UNDER HIGH SHEAR/HIGH TEMPERATURE

Processed cheese was prepared with and without microcrystalline cellulose (FMC Novagel RCN-10) and with and without the starch based texturizing agent.

The ingredients are as follows:

| INGREDIENTS | Hi Shear w/MCC | Hi Shear w/Texturizing Agent |
|---|---|---|
| Skim Cheese | 55.00 | 55.00 |
| Disodium Phosphate | 1.00 | 1.00 |
| Sodium Citrate | 1.50 | 1.50 |
| Salt | 0.50 | 0.50 |
| Nonfat Dry milk | 3.50 | 3.50 |
| Sweet Whey | 6.00 | 6.00 |
| Maltodextrin(DE=10) | 2.40 | 2.40 |
| 34% whey protein conc. | 1.00 | 1.00 |
| Novagel RCN-10 | 2.00 | |
| Gelcarin GP 911 | 0.30 | 0.30 |
| Seakem GP 418 | 0.10 | 0.10 |
| Texturizing Agent | | 2.00 |
| Water | 15.44 | 15.44 |
| Steam | 9.60 | 9.60 |
| 20% Lactic acid | 1.30 | 1.30 |
| Chedr Pow'r | 1.00 | 1.00 |
| Carot 73-color | 0.06 | 0.06 |
| Total | 100.70 | 100.70 |
| Target Moisture | 57.10 | 57.10 |

The dry ingredients were blended together and then liquid (preferably buttermilk) was added and mixed until smooth. The slurry was added to a small two pound (0.9 kg) Stephen Mixer/Cooker which was preheated to 90°C. The slurry was heated to 60°C while mixing at 300 r.p.m. Shredded skim milk cheese was then added and a vacuum was applied to 80%. The slurry was then mixed for 7.5 minutes at 500 r.p.m. and heated to 75°C. At that temperature the vacuum was released, acid was added to the mixture and stirred at 700 r.p.m. for 45 seconds. The mixture was cooled and refrigerated overnight at 5°C.

The products were evaluated for moisture, pH, melt (Schreiber melt test), flavor, texture (mouthfeel and touch), color, slicability (knife and mechanical), shred (ease of shred, dryness, balling on compression, release after compression) and ability to release from plastic packaging after cooling.

The results are shown in Table 4. Cheese produced under high shear with microcrystalline cellulose was smooth but soft. Cheese produced under high shear with texturizing agent contained white particulates.

### EXAMPLE 20

### PREPARATION OF PROCESSED CHEESE UNDER LOW SHEAR/HIGH TEMPERATURE

Cheese formulations as described in Example 19, were processed in a small five pound (2.25 kg) pilot plant Hobart Cooker. The cooker applies mild shear and has been found to correlate highly to 35 pound (16 kg) auger pilot plant cooker.

The dry ingredients were blended together and then water was added under agitation to yield a smooth slurry. The slurry was added to the Hobart cooker and slowly agitated. The cooker was heated with steam to 80-85°C and held for 5 minutes under agitation. Shredded skim milk cheese was added with agitation and steam injection continued until the temperature was 80-85°C. Acid was mixed into the slurry for one minute at high speed. The slurry was removed from the cooker, cooled and stored overnight at 5°C prior to evaluation.

The ingredients are as follows:

| INGREDIENTS | Low Shear w/MCC | Low Shear w/Texturizing Agent |
|---|---|---|
| Skim Cheese | 55.00 | 55.00 |
| Disodium Phosphate | 1.00 | 1.00 |
| Sodium Citrate | 1.50 | 1.50 |
| Salt | 0.50 | 0.50 |
| Nonfat Dry milk | 3.50 | 3.50 |
| Sweet Whey | 6.00 | 6.00 |
| Maltodextrin(DE=10) | 2.40 | 2.40 |
| 34% whey protein conc. | 1.00 | 1.00 |
| Novagel RCN-10 | 2.00 | |
| Gelcarin GP 911 | 0.30 | 0.30 |
| Seakem GP 418 | 0.10 | 0.10 |
| Texturizing Agent | | 2.00 |
| Water | 15.44 | 15.44 |
| Steam | 9.60 | 9.60 |
| 20% Lactic acid | 1.30 | 1.30 |
| Chedr Pow'r | 1.00 | 1.00 |
| Carot 73-color | 0.06 | 0.06 |
| Total | 100.70 | 100.70 |
| Target Moisture | 57.10 | 57.10 |

The products were evaluated for the parameters described in Example 19. The results are reported in Table 4. Cheese produced under low shear with microcrystalline cellulose was better in quality compared to similar cheese produced under high shear. Cheese produced under low shear with texturizing agent was better than similar cheese produced under high shear and slightly better than the cheese containing microcrystalline cellulose produced under low shear. It had a reduced perfumy flavor.

### EXAMPLE 21

### PREPARATION OF PROCESSED CHEESE - PARTIAL REPLACEMENT OF FILLERS

The process of Example 20 was followed to prepare processed cheese having the following ingredients:

| INGREDIENTS | A | B | C | D | E |
|---|---|---|---|---|---|
| Skim Cheese | 64.84 | 64.84 | 64.84 | 64.84 | 64.84 |
| Disodium Phosphate | 2.00 | 2.00 | 2.00 | 2.00 | 2.00 |
| Trisodium Phosphate | 0.60 | 0.60 | 0.60 | 0.60 | 0.60 |
| Sweet Whey | 4.00 | 4.00 | 4.00 | 4.00 | 4.00 |
| Maltodextrin(DE=10) | 2.00 | 2.00 | | | |
| Nonfat Dry milk | 4.00 | | 6.00 | 3.00 | |
| Texturizing Agent | | 2.00 | | 2.00 | 2.00 |
| Chedr Pow'r | 1.00 | 1.00 | 1.00 | 1.00 | 1.00 |
| Water | 9.50 | 11.50 | 9.50 | 10.50 | 13.50 |
| Steam | 8.00 | 8.00 | 8.00 | 8.00 | 8.00 |
| 20% Lactic acid | 4.00 | 4.00 | 4.00 | 4.00 | 4.00 |
| Carot 73-color | 0.60 | 0.60 | 0.60 | 0.60 | 0.60 |
| Total | | | | | |
| Target Moisture | 100.00 | 100.00 | 100.00 | 100.00 | 100.00 |

The results as evaluated according to Example 19 are shown in Table 5. The Sample B cheese was slightly soft whereas the Sample D formulation yielded a cheese product well suited for block/shred formats.

### EXAMPLE 22

### PREPARATION OF PROCESSED CHEESE - PARTIAL REPLACEMENT OF SKIM MILK CHEESE

The process of Example 20 was followed to prepare processed cheese having the following ingredients:

| | Sample | | | |
|---|---|---|---|---|
| INGREDIENTS | A | B | C | D |
| Skim Cheese | 50.00 | 55.00 | 60.00 | 64.84 |
| Disodium Phosphate | 1.50 | 1.50 | 1.75 | 2.00 |
| Trisodium Phosphate | 0.50 | 0.50 | 0.50 | 0.60 |
| Sweet Whey | 8.00 | 6.25 | 4.00 | 4.00 |
| Maltodextrin(DE=10) | 3.00 | 3.00 | 3.00 | |
| Nonfat Dry milk | 2.94 | 2.19 | 2.19 | 3.00 |
| Texturizing Agent | 2.00 | 2.00 | 2.00 | 2.00 |
| Chedr Pow'r | 1.00 | 1.00 | 1.00 | 1.00 |
| Water | 19.50 | 16.50 | 13.50 | 9.50 |
| Steam | 8.00 | 8.00 | 8.00 | 8.00 |
| 20% Lactic acid | 4.00 | 4.00 | 4.00 | 4.00 |
| Carot 73-color | 0.06 | 0.06 | 0.06 | 0.06 |
| Total | | | | |
| Target Moisture | 57.92 | 57.89 | 57.39 | 56.81 |

Skim milk levels from 50-65 of the finished product were evaluated and the results shown in Table 6. Sample A cheese product contained a high percentage of white particulates, indicating that hydration of starch was inadequate. Formulation for Sample B resulted in a poor cheese product. The formulation for Sample C resulted in a soft, wet cheese product.

### EXAMPLE 23

### PREPARATION OF PROCESSED CHEESE WITH VARYING AMOUNTS OF TEXTURIZING AGENT AND CARRAGEENAN

The process of Example 20 was followed to prepare processed cheese having the following ingredients:

| | Sample | | | | | |
|---|---|---|---|---|---|---|
| INGREDIENTS | A | B | C | D | E | F |
| Skim Cheese | 55.00 | 55.00 | 55.00 | 55.00 | 55.00 | 55.00 |
| Disodium Phosphate | 1.00 | 1.00 | 1.00 | 1.00 | 1.00 | 1.00 |
| Sodium Citrate | 1.50 | 1.50 | 1.50 | 1.50 | 1.50 | 1.50 |
| Sweet Whey | 6.50 | 6.50 | 6.50 | 6.50 | 6.50 | 6.50 |
| Maltodextrin(DE=10) | 1.49 | 1.89 | 1.99 | 2.39 | 0.99 | 1.39 |
| Nonfat Dry milk | 3.00 | 3.00 | 3.00 | 3.00 | 3.00 | 3.00 |
| Texturizing Agent | 2.00 | 2.00 | 1.50 | 1.50 | 2.50 | 2.50 |
| Gelcarin GP 911 | 0.30 | | 0.30 | | 0.30 | |
| Seakem GP 418 | 0.10 | | 0.10 | | 0.10 | |
| Salt | 0.50 | 0.50 | 0.50 | 0.50 | 0.50 | 0.50 |
| Chedr Pow'r | 1.00 | 1.00 | 1.00 | 1.00 | 1.00 | 1.00 |
| Water | 18.25 | 18.25 | 18.25 | 18.25 | 18.25 | 18.25 |
| Steam | 8.00 | 8.00 | 8.00 | 8.00 | 8.00 | 8.00 |
| 20% Lactic acid | 1.30 | 1.30 | 1.30 | 1.30 | 1.30 | 1.30 |
| Carot 73-color | 0.06 | 0.06 | 0.06 | 0.06 | 0.06 | 0.06 |
| Total | | | | | | |
| Target Moisture | 56.99 | 56.99 | 56.99 | 56.99 | 56.99 | 56.99 |

The results are reported in Table 7. Formulations for Samples A, B and C yield cheese products of excellent quality. Sample D was soft and similar to VELVEETA™ brand processed cheese and was not pasty. Sample E lacked flavor but had the best mechanical slice characteristics compared to the other samples.

### Examples for Edible Spreads and Cream Cheese Materials

- Maltodextrin M040 (DE 4-7) manufactured by Grain Processing Corp.
- Starch based texturizing agent derived from pregelatinized, high amylose starch (OPTAGRADE®) manufactured by Opta Food Ingredients, Inc.
- Titanium dioxide (Kowitt) manufactured by Warner Jenkins.
- Keltrol F xantham gum manufactured by Kelco Company.
- Lactic Acid (88) manufactured by ADM Corporation.
- Pasteurized skim milk and heavy cream (37.6% fat) supplied by local dairies.
- Disodium Phosphate manufactured by FMC Corp.
- Commercial product comparison using PROMISE® Ultra Fat Free (Van Den Bergh Foods Co., Lisle, IL).

### EXAMPLE 24: NO-FAT MARGARINE

### Formulation

| Ingredients | Weight/Weight Percentage |
|---|---|
| Water | 72.604 |
| Maltodextrin | 23.000 |
| Texturizing Agent | 3.000 |
| Salt | 1.000 |
| Titanium dioxide | 0.300 |
| Flavor (optional) | 0.030 |
| Potassium Sorbate | 0.100 |
| Sodium Benzoate | 0.100 |
| Xanthan Gum | 0.040 |
| B-carotene | 0.020 |
| BHA | 0.004 |
| Total | $\overline{\text{100.000}}$ |

### Process:

1. Heat water to 200°F (93°C), place in kitchen blender (use glass vessel preheated in boiling water to minimize temperature drop during processing). Slowly add starch based texturizing agent while mixing on medium speed. Once dispersed, mix on high speed for five minutes.
2. Transfer contents to a boiling water bath equipped with a bench top Silverson Homogenizer (Model L4R, small emulsion screen), maintaining 190-200°F (97.8 - 93°C). Slowly add remaining dry ingredients as a blend. Once dispersed, continue mixing for 5 additional minutes.
3. Slowly add color and flavor with constant mixing to evenly disperse.
4. Transfer product to ice/water bath, cool to 80°F (26.7°C) while mixing (400 rpm) with overhead stirrer (LIGHTNIN® mixer or equivalent).
5. Fill containers, refrigerate 3 days before evaluating.

### EXAMPLE 25

### 3% FAT MARGARINE-LIKE SPREADS

### Formulation

| Ingredients | Weight/Weight Percentage |
|---|---|
| Water | 64.506 |
| Maltodextrin | 23.000 |
| Heavy Cream | 7.900 |
| Texturizing Agent | 3.000 |
| Salt | 1.000 |
| Titanium dioxide | 0.300 |
| Flavor | 0.030 |
| Potassium Sorbate | 0.100 |
| Sodium Benzoate | 0.100 |
| Xanthan Gum | 0.040 |
| B-carotene | 0.020 |
| BHA | 0.004 |
| Total | $\overline{\text{100.000}}$ |

### Process:

1. Heat water and cream mixture to 200°F (93°C), place in kitchen blender (use glass vessel preheated in boiling water to minimize temperature drop during processing). Add starch based texturizing agent while mixing on medium speed. Once dispersed, mix on high speed for five minutes.
2. Transfer contents to a boiling water bath equipped with a bench top Silverson Homogenizer (Model L4R, small emulsion screen), maintaining 190-200°F (87.8-93°C). Slowly add remaining dry ingredients as a blend. Once dispersed, continue mixing for 5 additional minutes.
3. Slowly add color and flavor with constant mixing to evenly disperse.
4. Transfer product to ice/water bath, cool to 80°F (26.7°C) while mixing (400 rpm) with overhead stirrer (LIGHTNIN® mixer or equivalent).
5. Fill containers, refrigerate 3 days before evaluating.

### EXAMPLE 26

### MILK-BASED 3% FAT SPREADS

### Formulation

| Ingredients | Weight/Weight Percentage |
|---|---|
| Whole milk | 82.93 |
| Maltodextrin | 10.00 |
| Titanium Dioxide | 0.30 |
| Texturizing Agent | 2.00 |
| Salt | 1.50 |
| Flavor | 0.15 |
| Potassium Sorbate | 0.20 |
| Lactic Acid | 0.35 |
| Total | $\overline{\text{100.00}}$ |

### Process:

1. Heat milk and cream to 200°F (93°C), place in kitchen blender (use glass vessel preheated in boiling water to minimize temperature drop during processing). Add starch based texturizing agent while mixing on medium speed. Once dispersed, mix on high speed for five minutes.
2. Transfer contents to a boiling water bath equipped with a bench top Silverson Homogenizer (Model L4R, small emulsion screen), maintaining 190-200°F (87.8-93°C). Slowly add remaining dry ingredients as a blend. Once dispersed, continue mixing for 5 additional minutes.
3. Slowly add flavor, then acid with constant mixing to evenly disperse.
4. Transfer product to ice/water bath, cool to 80°F (26.7°C) while mixing (400 rpm) with overhead stirrer (LIGHTNIN® mixer or equivalent).
5. Fill containers, refrigerate 3 days before evaluating.

### Sensory Analysis

Samples were paneled by consensus with three expert tasters. Evaluations were double blind. Sensory scores were based upon a scale of 0 to 9. Sensory scores (Table 8) indicated that the fat-free containing starch based texturizing agent formulation (Example 24) was smooth and fat-like with no detectable off-flavors. Superior performance was noted when compared to commercial product. Another control formulation (maltodextrin M040 to replace the starch based texturizing agent 1:1) indicated that the starch based texturizing agent is critical to the fat-like rheology. Maltodextrin alone yielded a product with no gel set and very low viscosity.

### Texture Analysis

Peak force and gradient were measured using a TA-XT2 Texture Analyzer (Texture Technologies Corporation, 18 Fairview Road, Scarsdale, New York) equipped with a two inch (5.1 cm) diameter (flat) metal probe. Peak force (maximum force [in kilograms] measured during the test) and gradient (force/distance or kilograms/meter during testing) were measured by inserting the probe to constant depth (1 mm) at a constant speed (1 mm/sec). All samples were equilibrated for three days at 40°F (4°C) before testing. Data (Table 8) indicated peak force and gradient values close to the 60% fat control. Comparisons to the commercial spreads indicate significant improvements in fat-like texture.

### EXAMPLE 27

### NO-FAT CREAM CHEESE

### Formulation

| Ingredients | Weight/Weight Percentage |
|---|---|
| Whole Milk | 48.410 |
| Skim milk | 26.730 |
| Maltodextrin | 20.000 |
| Texturizing Agent | 2.500 |
| Lactic Acid | 0.600 |
| Salt | 0.700 |
| Titanium dioxide | 0.500 |
| Disodium phosphate | 0.300 |
| (duohydrate) | |
| Flavor (optional) | 0.120 |
| Potassium Sorbate | 0.070 |
| Sodium Benzoate | 0.070 |
| Total | $\overline{\text{100.000}}$ |

### Process:

1. Heat milk to 200°F (93°C), place in kitchen blender (use glass vessel preheated in boiling water to minimize temperature drop during processing). Add dry ingredients while mixing on medium speed. Once dispersed, mix on high speed for five minutes.
2. Transfer contents to a boiling water bath equipped with a bench top Silverson Homogenizer (Model L4R, small emulsion screen), maintaining 190-200°F (87.8-93°C). Homogenize for three minutes on maximum speed.
3. With continued mixing, slowly add color, flavor, then acid. Hold 3 minutes to pasteurize.
4. Immediately homogenize by passing through a 2-stage Gaulin homogenizer (2,500/500 psi) (17.23 x 10⁶/3.45 x 10⁶ Pa)
5. Transfer product to ice/water bath, cook to 80°F (26.7°C) while mixing (400 rpm) with overhead stirrer (LIGHTNIN® mixer or equivalent).
6. Fill containers, refrigerate 3 days before evaluating.

### Sensor Analysis

Samples were paneled by consensus with three expert tasters. Evaluations were double bind. Sensory scores were based on a scale from 0-9. Sensory scores given in Table 9 indicated the product containing the starch based texturizing agent was smooth and fat-like. No off-flavors were detected. As with the above formulations, organoleptic and physical attributes can be modified with the same ingredients outlined above.

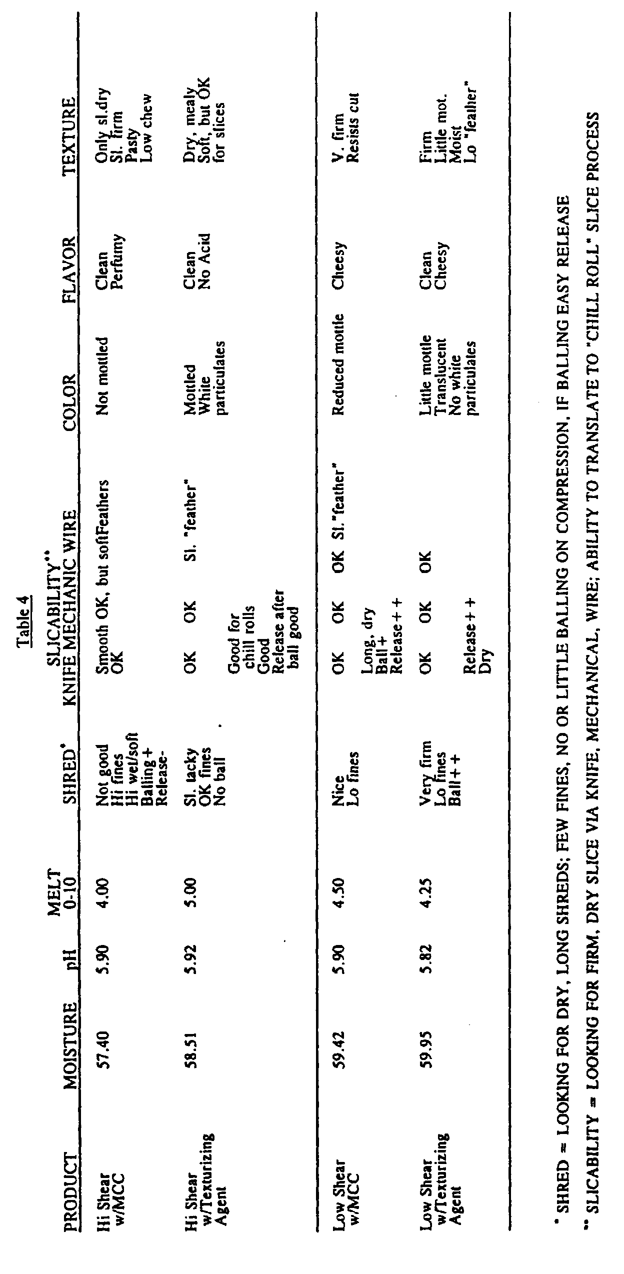

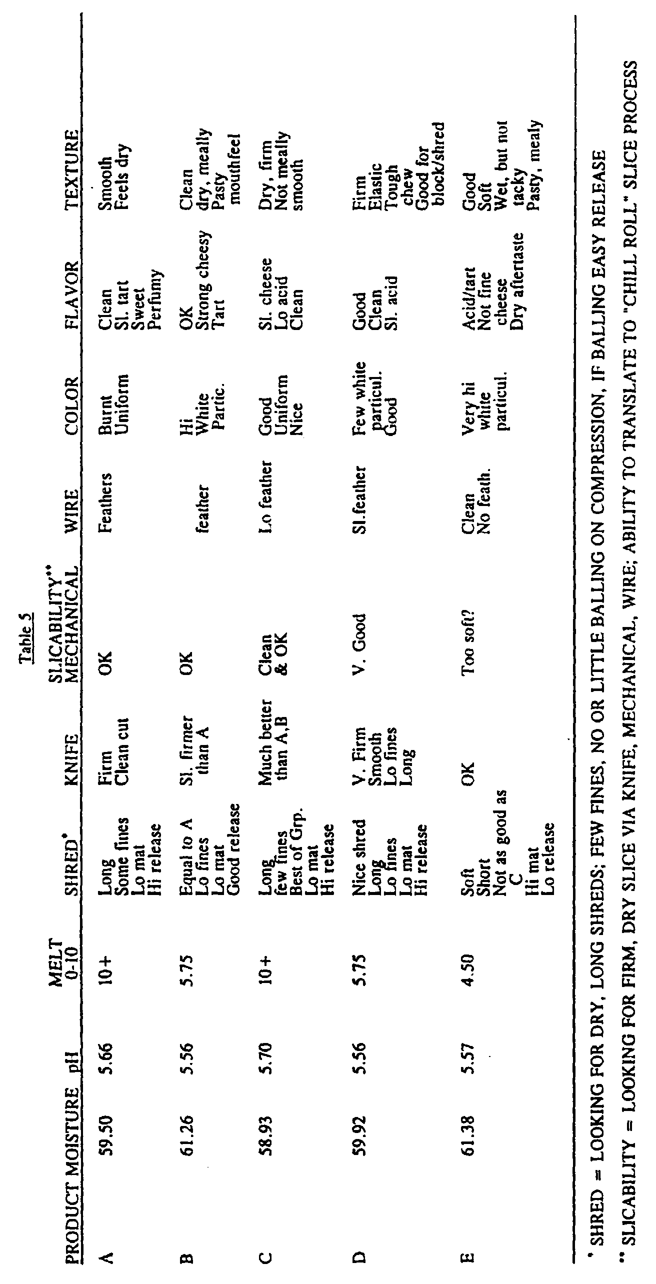

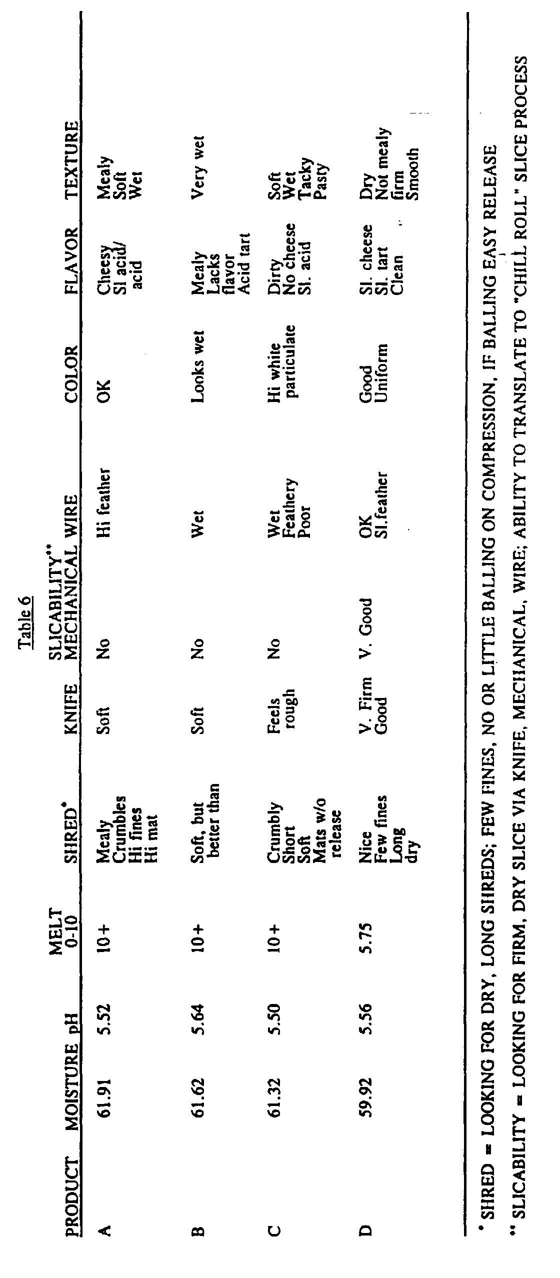

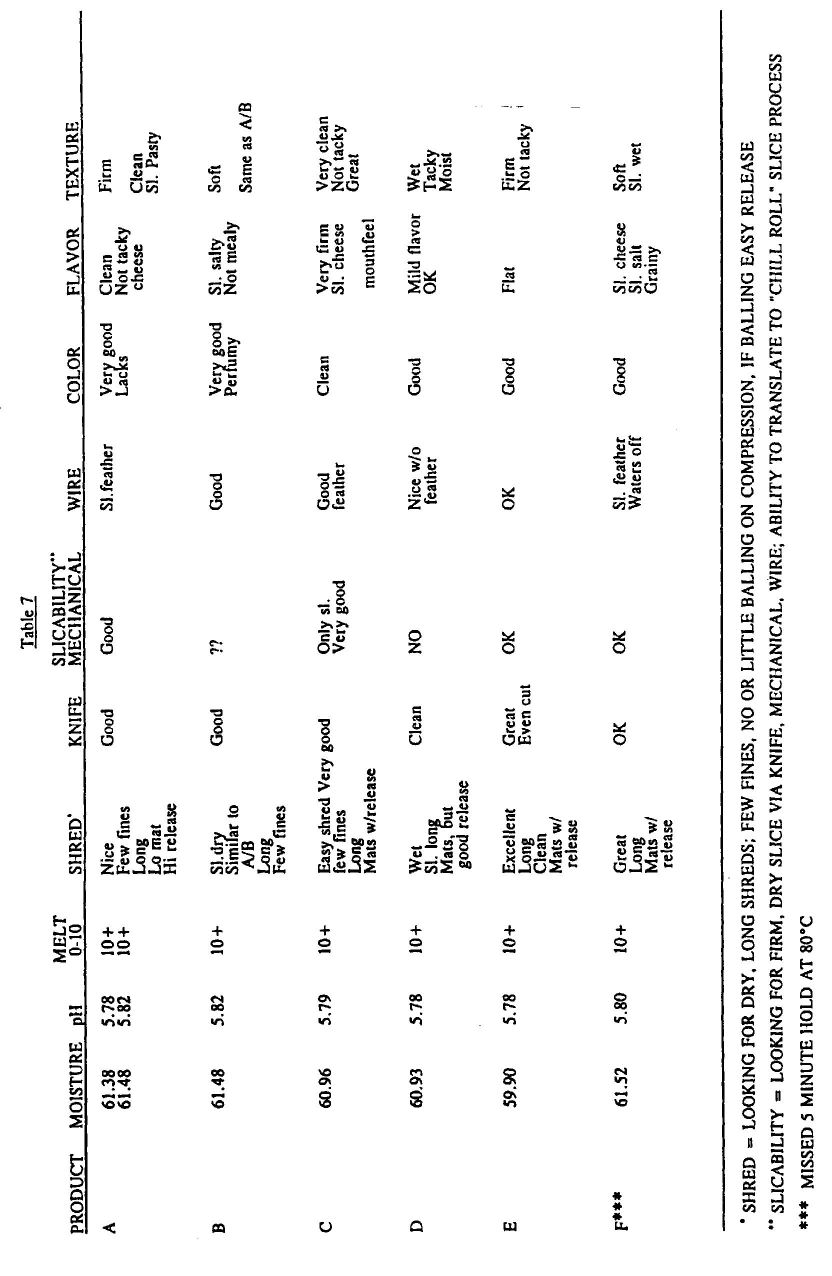

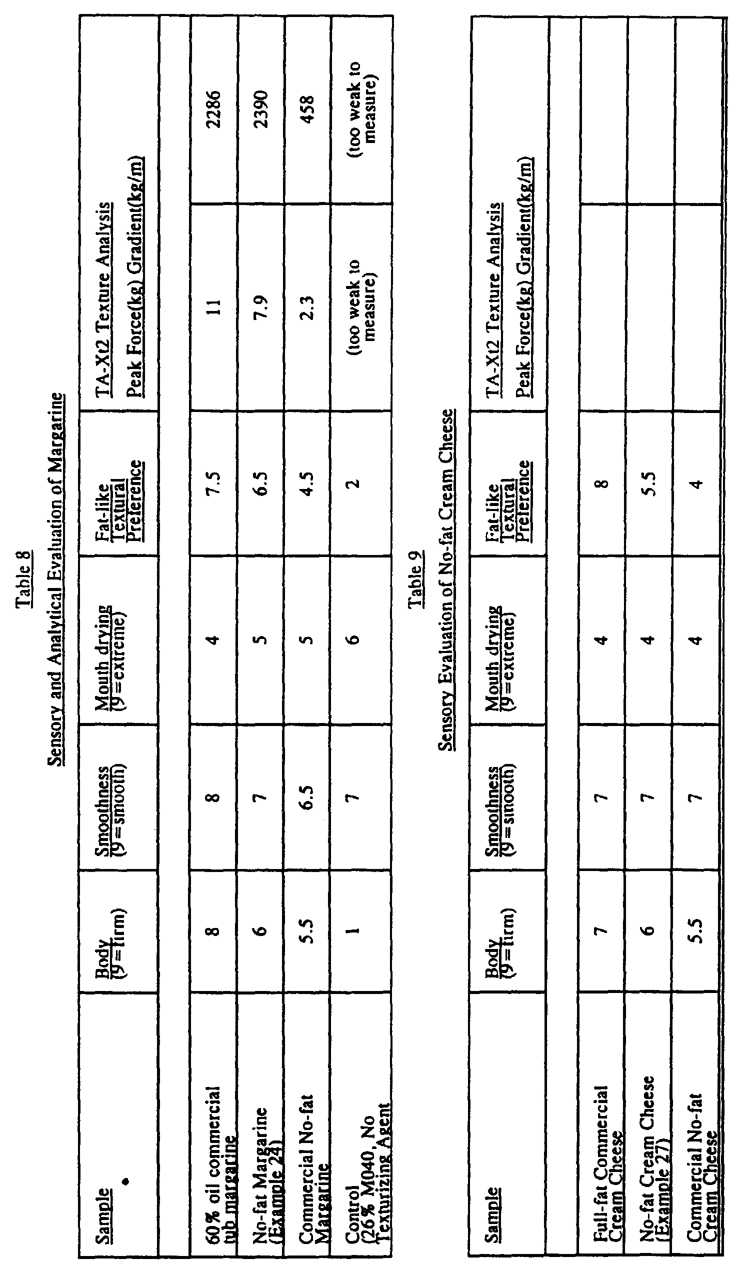

### Equivalents

Those skilled in the art will recognize, or be able to ascertain using no more than routine experimentation, many equivalents to the specific embodiments of the invention described herein. Such equivalents are intended to be encompassed by the following claims:

## Claims

1. A method for preparing a starch-based texturizing agent, comprising the steps of:
a) heating a slurry of high amylose starch in an acidic aqueous medium having a pH range of from 3 to 4.7 (eg from 4.3 to 4.7) under agitating conditions for a temperature, pressure and time sufficient to substantially disrupt starch granules, to produce a solubilized starch solution;
b) filtering the resultant solution to remove impurities; and
c) reducing the temperature of the resultant solution to a temperature and for a period of time sufficient for the starch to retrograde or partially retrograde, thereby yielding a starch-based texturising agent having a dextrose equivalent of less than 5.

2. The method of Claim 1, wherein (i) in step c) the temperature of the solution is reduced to about 4°C; or
(ii) further comprising the step of drying the texturizing agent into a powder, e.g., by spray drying.

3. A method of producing a high amylose starch-based texturizing agent, comprising the following steps:
a) heating a slurry of high amylose starch in an acidic aqueous medium having a pH range from 3 to 4.7 (eg from 4.3 to 4.7) under agitating conditions for a temperature, pressure and time sufficient to substantially disrupt starch granules to produce a solubilized starch solution;
b) filtering the resultant solution to remove impurities; and
c) drying the solubilized starch solution by a suitable means to present the amorphous structure and produce a starch based texturizing agent that is non-retrograded and non-crystalline and has a dextrose equivalent of less than 5.

4. The method of Claim 3, wherein the starch solution in step c) is dried by spray drying.

5. The method of any one of claims 1 to 4, wherein (i) the solution of step a) is treated with diatomaceous earth and activated charcoal prior to filtering in step b); or
(ii) step b) is performed by combining the resultant solution with diatomaceous earth and filtering the combination through a carbon impregnated filtration device.

6. The method of any one of claims 1 to 5, wherein (i) the high amylose starch is derived from corn, barley, oat or pea; or
(ii) the slurry comprises from 1 to 30% (w/v) high amylose starch, e.g. from 5 to 15% (w/v) high amylose starch; or
(iii) step a) is performed under agitating conditions at a final temperature from 125°C to 150°C, e.g., at final temperature of about 138°C and held for from 1 to 120 minutes; or
(iv) step a) is performed by jet cooking the slurry of starch; or
(v) an excipient and/or co-drying agent is added prior to or after the filtration step, and for example
wherein the excipient and/or co-drying agent is selected from the group consisting of gums, sugars, proteins, lipids, flavors, colors and starches, e.g. maltodextrin.

7. A starch based texturising agent or a food formulation containing a starch-based texturizing agent obtainable by the method of any one of Claims 1 to 6.

8. A method of making a reduced-fat or non-fat food formulation in which fat normally present in the food formulation is at least partially replaced with a starch-based texturizing agent, comprising the steps of:
a) providing a high amylose starch-derived texturizing agent that is pregelatinized under aqueous acid conditions and that has a dextrose equivalent value of less than 5 and possesses no off-flavors that can be imparted to the food formulation wherein the texturizing agent is retrograded and crystalline, partially retrograded and crystalline, or non-retrograded and non-crystalline and wherein the texturising agent is obtainable by the process of any one of Claims 1 to 6; and
b) admixing to a food formulation, a starch-based texturizing agent in a quantity sufficient to at least partially replace fat content that is normally present in the food formulation, thereby producing a reduced-fat food.

9. A substantially fat free, reduced fat or low fat cheese product comprising a starch based texturizing agent derived from high amylose starch in which the starch that has been pregelatinized under aqueous acid conditions and has a dextrose equivalent value of less than five, non-fat or fat containing dairy ingredient and one or more flavoring agents, wherein the starch based texturizing agent is retrograded and crystalline, partially retrograded and crystalline, or non-retrograded and non-crystalline, and is obtainable by the process of any one of Claims 1 to 6.

10. The cheese product of Claim 9, (i) wherein the starch based texturizing agent is present in amount of from 1.0% to 4.0% by weight, e.g., from 1.5% to 2.5% by weight; or
(ii) further comprising an emulsifying salt, selected for example from disodium phosphate, trisodium phosphate, sodium citrate and combinations thereof; or
(iii) wherein the nonfat or fat containing dairy ingredient is selected from the group consisting of whole milk, whole milk cheese, reduced fat milk, reduced fat milk cheese, skim milk cheese, nonfat drymilk, skim milk, skim butter milk, milk protein isolates and combinations of these; or
(iv) the pregelatinized, high amylose starch comprises an excipient, selected for example from gums, sugars, proteins, lipids, flavors, colors and starches, e.g. maltodextrin.

11. A substantially fat free, reduced fat or low fat spread comprising a thickening agent, one or more flavoring agents and optional dairy ingredient, wherein the thickening agent consists essentially of starch and a starch based texturizing agent derived from high amylose starch that has been pregelatinized under aqueous acid conditions and in which the starch of the starch based texturizing agent has a dextrose equivalent value of less than five; wherein the starch based texturizing agent is retrograded and crystalline, partially retrograded and crystalline, or non-retrograded and non-crystalline, and is obtainable by the process of any one of claims 1 to 6.

12. A non-fat, reduced fat or low fat cream cheese comprising a thickening agent, one or more flavoring agents and optional dairy ingredient, wherein the thickening agent consists essentially of starch and a starch based texturizing agent derived from high amylose starch that has been pregelatinized under aqueous acid conditions and in which the starch of the starch based texturizing agent has a dextrose equivalent value of less than five; wherein the starch based texturizing agent is retrograded and crystalline, partially retrograded and crystalline, or non-retrograded and non-crystalline, and is obtainable by the process of any one of Claims 1 to 6.

13. The spread or cream cheese according to Claim 11 or Claim 12 wherein (i) the starch based texturizing agent is present in an amount of from 1.0% to 6.0% by weight; or
(ii) the starch based texturizing agent is derived from high amylose starch from barley, pea or corn; or
(iii) the pregelatinized, high amylose starch comprises an excipient, e.g., maltodextrin; or
(iv) the starch is a hydrolyzed starch (e.g., maltodextrin), granular starch or non-granular starch.

## Patentansprüche

1. Verfahren zur Herstellung eines auf Stärke basierenden Texturierungsmittels, das die folgenden Stufen umfaßt:
a) Erhitzen einer Aufschlämmung von amylose-reicher Stärke in einem sauren, wäßrigen Medium eines pH-Bereiches von 3 bis 4,7 (z.B. von 4,3 bis 4,7) unter Rührbedingungen bei einer Temperatur, einem Druck und für eine Zeitdauer, die ausreichen, um die Stärkekörner unter Herstellung einer solubilisierten Stärkelösung im wesentlichen aufzubrechen;
b) Filtrieren der resultierenden Lösung zur Entfernung von Verunreinigungen; und
c) Reduzieren der Temperatur der resultierenden Lösung auf eine Temperatur und für eine Zeitdauer, die ausreichen, um die Stärke zu retrogradieren oder teilweise zu retrogradieren unter Erhalt eines auf Stärke basierenden Texturierungsmittels mit einem Dextrose-Äquivalent von kleiner als 5.

2. Verfahren nach Anspruch 1, wobei (i) in Stufe c) die Temperatur der Lösung auf etwa 4 °C reduziert wird; oder (ii) das Verfahren außerdem die Stufe der Trocknung des Texturierungsmittels zu einem Pulver, z.B. durch Sprühtrocknung, umfaßt.

3. Verfahren zur Herstellung eines amylose-reichen, auf Stärke basierenden Texturierungsmittels, das die folgenden Stufen umfaßt:
a) Erhitzen einer Aufschlämmung von amylose-reicher Stärke in einem sauren, wäßrigen Medium eines pH-Bereiches von 3 bis 4,7 (z.B. von 4,3 bis 4,7) unter Rührbedingungen bei einer Temperatur, einem Druck und für eine Zeitdauer, die ausreichen, um die Stärkekörner unter Herstellung einer solubilisierten Stärkelösung im wesentlichen aufzubrechen;
b) Filtrieren der resultierenden Lösung zur Entfernung von Verunreinigungen; und
c) Trocknen der solubilisierten Stärkelösung durch ein geeignetes Mittel unter Bewahrung der amorphen Struktur und Herstellung eines auf Stärke basierenden Texturierungsmittels, das nicht retrogradiert und nicht kristallin ist und ein Dextrose-Äquivalent von kleiner als 5 aufweist.

4. Verfahren nach Anspruch 3, wobei die Stärkelösung in Stufe c) durch Sprühtrocknen getrocknet wird.

5. Verfahren nach einem der Ansprüche 1 bis 4, wobei (i) die Lösung von Stufe a) vor der Filtration in Stufe b)mit Diatomeenerde und Aktivkohle behandelt wird; oder (ii) Stufe b) durch Kombination der resultierenden Lösung mit Diatomeenerde und Filtration der Kombination über eine Kohle-imprägnierte Filtrationsvorrichtung durchgeführt wird.

6. Verfahren nach einem der Ansprüche 1 bis 5, wobei (i) die amylose-reiche Stärke aus Mais, Gerste, Hafer oder Erbsen stammt; oder (ii) die Aufschlämmung 1 bis 30 % (G/V) amylose-reiche Stärke, z.B. 5 bis 15 % (G/V) amylose-reiche Stärke, umfaßt; oder (iii) Stufe a) unter Rührbedingungen bei einer Endtemperatur von 125 °C bis 150 °C, z.B. bei einer Endtemperatur von etwa 138 °C, durchgeführt und 1 bis 120 min dort gehalten wird; oder (iv) Stufe a) durch Strahlkochen der Stärkeaufschlämmung durchgeführt wird; oder (v) ein Hilfsstoff und/oder ein zusätzliches Trockenmittel vor oder nach der Filtrationsstufe zugesetzt wird, und wobei beispielsweise der Hilfsstoff und/oder das zusätzliche Trockenmittel ausgewählt ist aus der Gruppe, bestehend aus pflanzlichen Gummistoffen, Zuckern, Proteinen, Lipiden, Aromastoffen, Farbstoffen und Stärken, z.B. Maltodextrin.

7. Auf Stärke basierendes Texturierungsmittel oder eine Lebensmittel-Formulierung, enthaltend ein auf Stärke basierendes Texturierungsmittel, das durch das Verfahren nach einem der Ansprüche 1 bis 6 erhältlich ist.

8. Verfahren zur Herstellung einer fettreduzierten oder fettfreien Lebensmittel-Formulierung, wobei Fett, das normalerweise in der Lebensmittel-Formulierung vorhanden ist, wenigstens teilweise durch ein auf Stärke basierendes Texturierungsmittel ersetzt wird, das die folgenden Stufen umfaßt:
a) Bereitstellen eines amylose-reichen, auf Stärke basierenden Texturierungsmittels, das unter wäßrigen sauren Bedingungen vorgeliert wird und einen Dextrose-Äquivalentwert von kleiner als 5 aufweist und keinen Beigeschmack besitzt, der auf die Lebensmittel-Formulierung übertragen werden kann, wobei das Texturierungsmittel retrogradiert und kristallin, teilweise retrogradiert und kristallin oder nicht retrogradiert und nicht kristallin ist und wobei das Texturierungsmittel durch das Verfahren nach einem der Ansprüche 1 bis 6 erhältlich ist; und
b) Zumischen eines auf Stärke basierenden Texturierungsmittels zu einer Lebensmittel-Formulierung in einer Menge, die ausreicht, um den normalerweise in der Lebensmittel-Formulierung vorhandenen Fettgehalt unter Herstellung eines fettreduzierten Lebensmittels wenigstens teilweise zu ersetzen.

9. Im wesentlichen fettfreies, fettreduziertes oder fettarmes Käseprodukt, umfassend ein auf Stärke basierendes Texturierungsmittel, das sich von amylosereicher Stärke ableitet, wobei die Stärke unter wäßrigen sauren Bedingungen vorgeliert worden ist und das Texturierungsmittel einen Dextrose-Äquivalentwert von kleiner als 5 besitzt, einen fettfreien oder fetthaltigen Milchprodukt-Bestandteil und einen oder mehrere Aromastoffe, wobei das auf Stärke basierende Texturierungsmittel retrogradiert und kristallin, teilweise retrogradiert und kristallin oder nicht retrogradiert und nicht kristallin ist und durch das Verfahren nach einem der Ansprüche 1 bis 6 erhältlich ist.

10. Käseprodukt nach Anspruch 9, wobei (i) das auf Stärke basierende Texturierungsmittel in einer Menge von 1,0 bis 4,0 Gew.-%, z.B. von 1,5 bis 2,5 Gew.-%, vorhanden ist; oder (ii) das Käseprodukt außerdem ein Emulgiersalz umfaßt, das beispielsweise aus Dinatriumphosphat, Trinatriumphosphat, Natriumcitrat und Kombinationen hiervon ausgewählt ist; oder (iii) der fettfreie oder fetthaltige Milchprodukt-Bestandteil ausgewählt ist aus der Gruppe bestehend aus Vollmilch, Vollmilchkäse, fettreduzierter Milch, Käse aus fettreduzierter Milch, Käse aus entrahmter Milch, fettfreier Trockenmilch, entrahmter Milch, entrahmter Buttermilch, Milchproteinisolaten und Kombinationen hiervon, oder (iv) die vorgelierte amylose-reiche Stärke einen Hilfsstoff umfaßt, der beispielsweise aus pflanzlichen Gummistoffen, Zuckern, Proteinen, Lipiden, Aromastoffen, Farbstoffen und Stärken, z.B. Maltodextrin, ausgewählt ist.

11. Im wesentlichen fettfreier, fettreduzierter oder fettarmer Aufstrich, umfassend ein Verdickungsmittel, ein oder mehrere Aromastoffe und optionalen Milchprodukt-Zusatzstoff, wobei das Verdickungsmittel im wesentlichen aus Stärke und einem auf Stärke basierenden, von amylose-reicher Stärke abgeleiteten Texturierungsmittel besteht, das unter wäßrigen sauren Bedingungen vorgeliert worden ist und in dem die Stärke des auf Stärke basierenden Texturierungsmittels einen Dextrose-Equivalentwert von kleiner als 5 besitzt; wobei das auf Stärke basierende Texturierungsmittel retrogradiert und kristallin, teilweise retrogradiert und kristallin oder nicht retrogradiert und nicht kristallin ist und durch das Verfahren nach einem der Ansprüche 1 bis 6 erhältlich ist.

12. Fettfreier, fettreduzierter oder fettarmer Rahmkäse, umfassend ein Verdickungsmittel, einen oder mehrere Aromastoffe und optionalen Milchprodukt-Zusatzstoff, wobei das Verdickungsmittel im wesentlichen aus Stärke und einem auf Stärke basierenden, von amylose-reicher Stärke abgeleiteten Texturierungsmittel besteht, das unter wäßrigen sauren Bedingungen vorgeliert worden ist und in dem die Stärke des auf Stärke basierenden Texturierungsmittels einen Dextrose-Equivalentwert von kleiner als 5 besitzt; wobei das auf Stärke basierende Texturierungsmittel retrogradiert und kristallin, teilweise retrogradiert und kristallin oder nicht retrogradiert und nicht kristallin ist und durch das Verfahren nach einem der Ansprüche 1 bis 6 erhältlich ist.

13. Aufstrich oder Rahmkäse nach Anspruch 11 oder Anspruch 12, wobei (i) das auf Stärke basierende Texturierungsmittel in einer Menge von 1,0 bis 6,0 Gew.-% vorhanden ist oder (ii) das auf Stärke basierende Texturierungsmittel sich von amylose-reicher Stärke aus Gerste, Erbsen oder Mais ableitet; oder (iii) die vorgelierte amylose-reiche Stärke einen Hilfsstoff, z.B. Maltodextrin, umfaßt; oder (iv) die Stärke eine hydrolysierte Stärke (z.B. Maltodextrin), eine gekörnte Stärke oder eine nicht gekörnte Stärke ist.

## Revendications

1. Méthode de préparation d'un agent texturant à base d'amidon, comprenant les étapes consistant à :
a) chauffer une pâte d'un amidon à haute teneur en amylose dans un milieu aqueux acide ayant un pH allant de 3 à 4,7 (par exemple de 4,3 à 4,7) dans des conditions d'agitation et à une température, une pression et pendant un temps suffisants pour rompre les granules d'amidon de manière substantielle et produire une solution d'amidon solubilisé ;
b) filtrer la solution résultante pour enlever les impuretés ;
c) réduire la température de la solution résultante à une température et pendant une période de temps suffisants pour obtenir de l'amidon rétrogradé ou partiellement rétrogradé, ce par quoi on obtient un agent texturant à base d'amidon ayant un équivalent dextrose de moins de 5.

2. Méthode selon la revendication 1, dans laquelle (i) dans l'étape c), la température de la solution est réduite jusqu'à environ 4°C ; ou
(ii) comprenant en outre l'étape de séchage de l'agent texturant en une poudre, par exemple par séchage par pulvérisation.

3. Méthode de production d'un agent texturant à base d'amidon à haute teneur en amylose, comprenant les étapes suivantes consistant à :
a) chauffer une pâte d'un amidon à haute teneur en amylose dans un milieu aqueux acide ayant un pH allant de 3 à 4,7 (par exemple de 4,3 à 4,7) dans des conditions d'agitation et à une température, une pression et pendant un temps suffisants pour rompre les granules d'amidon de manière substantielle et produire une solution d'amidon solubilisé ;
b) filtrer la solution résultante pour enlever les impuretés ; et
c) sécher la solution d'amidon solubilisé par un moyen approprié pour conserver la structure amorphe et produire un agent texturant à base d'amidon qui soit non rétrogradé et non cristallin et qui ait un équivalent dextrose de moins de 5.

4. Méthode selon la revendication 3, dans laquelle la solution d'amidon dans l'étape c) est séchée par séchage par pulvérisation.

5. Méthode selon l'une quelconque des revendications 1 à 4, dans laquelle (i) la solution de l'étape a) est traitée avec de la terre de diatomées et du charbon actif avant la filtration de l'étape b) ; ou (ii) l'étape b) est réalisée en combinant la solution résultante avec de la terre de diatomées et en filtrant la combinaison à travers un dispositif de filtration imprégné de carbone.

6. Méthode selon l'une quelconque des revendications 1 à 5, dans laquelle :
(i) l'amidon à haute teneur en amylose est issu de maïs, orge, avoine ou pois ; ou
(ii) la pâte comprend de 1 à 30 % (en poids/volume) d'amidon à haute teneur en amylose, par exemple de 5 à 15 % (en poids/volume) en amidon à haute teneur en amylose ; ou
(iii) l'étape a) est réalisée dans des conditions d'agitation à une température finale de 125°C à 150°C, par exemple à une température finale d'environ 138°C et maintenue pendant 1 à 120 minutes ; ou
(iv) l'étape a) est réalisée par cuisson rapide ("jet cooking") de la pâte d'amidon ; ou
(v) un excipient et/ou un agent de coséchage est ajouté avant ou après l'étape de filtration, ledit excipient et/ou l'agent de coséchage étant par exemple choisi parmi les gommes, les sucres, les protéines, les lipides, les arômes, les colorants et les amidons, par exemple de la maltodextrine.

7. Agent texturant à base d'amidon ou formulation alimentaire contenant un agent à base d'amidon, susceptible d'être obtenu par la méthode selon l'une quelconque des revendications 1 à 6.

8. Méthode de fabrication d'une formulation alimentaire sans matière grasse ou à teneur en matière grasse réduite, dans laquelle la matière grasse normalement présente dans la formulation alimentaire est au moins partiellement remplacée par un agent texturant à base d'amidon comprenant les étapes consistant à :
a) fournir un agent texturant à base d'amidon à haute teneur en amylose qui est prégélatinisé dans des conditions acides aqueuses et qui a un équivalent dextrose de moins de 5 et ne possède aucun arôme "parasite" qui puisse être transféré à la formulation alimentaire, l'agent texturant étant rétrogradé et cristallin, partiellement rétrogradé et cristallin, ou non rétrogradé et non cristallin, et l'agent texturant étant susceptible d'être obtenu par la méthode selon l'une quelconque des revendications 1 à 6 ; et
b) mélanger à une formulation alimentaire un agent texturant à base d'amidon en une quantité suffisante pour remplacer au moins partiellement la teneur en matière grasse qui est normalement présente dans la formulation alimentaire, ce par quoi est produit un aliment à teneur en matière grasse réduite.

9. Produit fromager essentiellement exempt de matière grasse, ou à teneur en matière grasse réduite ou faible, comprenant un agent texturant à base d'amidon dérivé d'amidon à haute teneur an amylose, dans lequel l'amidon a été prégélatinisé dans des conditions acides aqueuses et a un équivalent dextrose de moins de 5, un ingrédient lacté avec ou sans matière grasse et un ou plusieurs agents aromatisants, l'agent texturant à base d'amidon étant rétrogradé et cristallin, partiellement rétrogradé et cristallin, ou non rétrogradé et non cristallin, et étant susceptible d'être obtenu par la méthode selon l'une quelconque des revendications 1 à 6.

10. Produit fromager selon la revendication 9, (i) dans lequel l'agent texturant à base d'amidon est présent en une quantité allant de 1,0 % à 4,0 % an poids, par exemple de 1,5 % à 2,5 % en poids ; ou
(ii) comprenant an outre un sel émulsifiant choisi par exemple le phosphate disodique, le phosphate trisodique, le citrate de sodium et des combinaisons de ceux-ci ; ou
(iii) l'ingrédient lacté avec ou sans matière grasse choisi parmi du lait entier, du fromage au lait entier, du lait à teneur an matière grasse réduite, du fromage au lait à teneur an matière grasse réduite, du fromage au lait écrémé, du lait an poudre écrémé, du lait écrémé, du petit-lait, les isolats de protéines du lait et des combinaisons de ceux-ci ; ou
(iv) l'amidon à haute teneur an amylose prégélatinisé comprend un excipient par exemple choisi parmi des gommes, des sucres, des protéines, des lipides, des arômes, des colorants et des amidons, par exemple de la maltodextrine.

11. Pâte à tartiner essentiellement exempte de matière grasse, à teneur an matière grasse réduite ou à faible teneur an matière grasse comprenant un agent épaississant, un ou plusieurs agents aromatisants et éventuellement un ingrédient laitier dans laquelle l'agent épaississant consiste essentiellement an amidon et an agent texturant à base d'amidon dérivé d'un amidon à haute teneur an amylose qui a été prégélatinisé dans des conditions aqueuses acides et dans laquelle l'amidon de l'agent texturant à base d'amidon a un équivalent dextrose de moins de 5, ledit agent texturant à base d'amidon étant rétrogradé et cristallin, partiellement rétrogradé et cristallin, ou non rétrogradé et non cristallin et est susceptible d'être obtenu par la méthode selon l'une quelconque des revendications 1 à 6.

12. Fromage crémeux sans matière grasse, à teneur à matière grasse réduite ou faible, comprenant un agent épaississant, un ou plusieurs agents aromatisants et éventuellement un ingrédient laitier, dans lequel l'agent épaississant consiste essentiellement an amidon et en agent texturant à base d'amidon dérivé d'un amidon à haute teneur en amylose qui a été prégélatinisé dans des conditions aqueuses acides et dans lequel l'amidon de l'agent texturant à base d'amidon a un équivalent dextrose de moins de 5 ; l'agent texturant à base d'amidon étant rétrogradé et cristallin, partiellement rétrogradé et cristallin, ou non rétrogradé et non cristallin et étant susceptible d'être obtenu par la méthode selon l'une quelconque des revendications 1 à 6.

13. Pâte à tartiner ou fromage crémeux selon la revendication 11 ou la revendication 12, dans lequel (i) l'agent texturant à base d'amidon est présent en une quantité allant de 1,0 % à 6,0 % en poids ; ou
(ii) l'agent texturant à base d'amidon est issu d'un amidon à haute teneur en amylose d'orge, de pois ou de maïs ; ou
(iii) l'amidon à haute teneur en amylose prégélatinisé comprend un excipient, par exemple la maltodextrine ; ou
(iv) l'amidon est un amidon hydrolysé (par exemple, la maltodextrine), un amidon granulaire ou un amidon non granulaire.
